# EUROPEAN PATENT APPLICATION

(11) **EP 3 936 569 A1**
(43) Date of publication of application: **12.01.2022**
(21) Application number: 20765607.5
(22) Date of filing: 27.02.2020
(51) Int. Cl.: C08L 71/00, B60C 1/00, B60C 19/12, C08K 3/04, C08K 3/26, C08K 3/36, C09K 3/10

(54) **POLYMER BLEND, COMPOSITION, SEALANT, AND SEALANT FOR TIRE**

(30) Priority: 04.03.2019 JP 2019038929
(71) Applicant: KANEKA CORPORATION, Osaka 530-8288 (JP); BRIDGESTONE CORPORATION, Chuo-ku Tokyo 104-8340 (JP)
(72) Inventor: MIYAFUJI, Kiyoshi, Takasago-shi, Hyogo 676-8688 (JP); NAKASHIMA, Tohru, Osaka-shi, Osaka 530-8288 (JP); NISHIURA, Fumiteru, Tokyo 104-8340 (JP)
(74) Representative: Vossius & Partner Patentanwälte Rechtsanwälte mbB
(86) International application number: PCT/JP2020/008192
(87) International publication number: WO 2020/179644

(57) **Abstract**

Provided are: a polymer blend which includes an organic polymer having a reactive silicon-containing group and which can give cured objects excellent in terms of elongation property and stress relaxation; a composition comprising the polymer blend, a specific filler, and a curing catalyst; a sealant comprising the composition; and a sealant for tires. A polymer blend which includes an organic polymer having a bifunctional reactive silicon-containing group of a specific structure is mixed with given proportions of a polyoxyalkylene (A) which has a number-average molecular weight of 13,000 or higher and 100,000 or lower, has a reactive-silicon-containing-group equivalent Eqa of 0.010 mmol/g or more and 0.29 mmol/g or less, and contains more than one silicon-containing group per molecule and a polyoxyalkylene (B) which has a number-average molecular weight of 3,000 or higher and 25,000 or lower, has a reactive-silicon-containing group only at one end, and has a reactive-silicon-containing-group equivalent Eqb of 0.03 mmol/g or more and 0.58 mmol/g or less.

## Description

### TECHNICAL FIELD

The present invention relates to a polymer blend containing an organic polymer having a reactive silicon-containing group; a composition containing this polymer blend, a specific filler and a curing catalyst; a sealant made using this composition, and a sealant for tires.

### BACKGROUND ART

Due to having various superior characteristics such as giving a cured product superior in extensibility, compositions containing polymers having a reactive silicon-containing group are being used in various applications (refer to Patent Document 1).

In addition, the composition with a rubber component such as butyl rubber as the main constituent is used in the formation of a puncture-prevention sealant for pneumatic tires due to its superior extensibility. As a composition used in such an application, for example, a puncture-prevention sealant composition has been proposed which contains a butyl rubber of a specific composition, peroxide, and a cashew-modified phenol-formaldehyde resin, each in predetermined ratios (refer to Patent Document 2).

Due to having superior extensibility similarly to the composition disclosed in Patent Document 2, etc., the application has been expected of the aforementioned cured product of a composition containing a polymer having a reactive silicon-containing group to puncture-prevention sealant production for pneumatic tires.

Patent Document 1: Japanese Unexamined Patent Application, Publication No. 2011-236363
Patent Document 2: Japanese Unexamined Patent Application, Publication No. 2006-152110

### DISCLOSURE OF THE INVENTION

### Problems to be Solved by the Invention

However, in the puncture-prevention sealant of pneumatic tires, a further improvement in puncture prevention performance, and lengthening of the time for which the vehicle can travel in a state with a nail or the like is stuck in the tire have been sought. In this point, the performance is not sufficient in the cured product of the composition disclosed in Cited Document 1, or the resin composition disclosed in Cited Document 2, and further improvements are sought in the extensibility and stress relaxation of the cured product and resin composition.

The present invention has been made taking account of the above-mentioned problems, and has an object of providing a polymer blend which includes an organic polymer having a reactive silicon-containing group and which can give cured objects excellent in terms of elongation property and stress relaxation; a composition comprising the polymer blend, a specific filler, and a curing catalyst; a sealant comprising the composition; and a sealant for tires.

### Means for Solving the Problems

The inventors of the present invention conducted studies solve the above-mentioned problem, thereby completing the following invention.

More specifically, the present invention relates to the following.
(1) A polymer blend comprising an organic polymer having a reactive silicon-containing group represented by general formula (1), wherein the organic polymer contains a polyoxyalkylene (A) having a number average molecular weight of 13,000 or higher and 100,000 or lower, reactive silicon-containing group equivalent Eqa of 0.010 mmol/g or more and 0.29 mmol/g or less, and more than 1 silicon-containing groups per molecule; and a polyoxyalkylene (B) having a number average molecular weight of 3,000 or higher and 25,000 or lower, and reactive silicon-containing group equivalent Eqb of 0.03 mmol/g or more and 0.58 mmol/g or less, and
   wherein a value of (R^{B}×Eqb)/(R^{A}×Eqa) is 1.9 or more and 7.0 or less, when defining content of the polyoxyalkylene (A) in the polymer blend as R^{A} mass% and defining content of the polyoxyalkylene (B) in the polymer blend as R^{B} mass%,

   -SiR¹₁X₂ (1)

   wherein R¹ is a substituted or unsubstituted hydrocarbon group having 1 or more and 20 or less carbon atoms,
   X is a hydroxyl group or hydrolysable group, and
   two of X may be the same, or may differ.
(2) The polymer blend according to (1), wherein the value of (R^{B}×Eqb)/(R^{A}×Eqa) is 3.7 or more and 7.0 or less.
(3) The polymer blend according to (1) or (2), wherein storage modulus G' measured at a frequency of 1 Hz at -20°C or higher and 80°C or lower of a cured product of the polymer blend is 2 kPa or more and 0.5 MPa or less, and loss tangent is 0.3 or more and 2.0 or less.
(4) The polymer blend according to any one of (1) to (3), wherein breaking elongation (EB) at 23°C of a cured product of the polymer blend is 800% or more.
(5) The polymer blend according to any one of (1) to (4), wherein gel fraction of a cured product of the polymer blend is 0.5% or more and 40% or less.
(6) A composition comprising the polymer blend according to any one of (1) to (5); at least one filler selected from the group consisting of fillers of calcium carbonate, silica and carbon black; and a curing catalyst.
(7) The composition according to (6), wherein the filler is calcium carbonate, and content of the calcium carbonate is 0.1 vol.% or more and 15 vol.% or less relative to total volume of the composition.
(8) The composition according to (6), wherein the filler is silica, and content of the silica is 0.1 vol.% or more and 5 vol.% or less relative to total volume of the composition.
(9) The composition according to (6), wherein the filler is carbon black, and content of the carbon black is 0.1 vol.% or more and 10 vol.% or less relative to total volume of the composition.
(10) The composition according to (9), wherein oil absorption of the carbon black is 100 mL/100 g or more.
(11) The composition according to (9) or (10), wherein BET specific surface area of the carbon black is 80 m²/g or more.
(12) A sealant comprising the composition according to any one of (6) to (11), or a cured product of the composition.
(13) A tire sealant comprising the composition according to any one of (6) to (11), or a cured product of the composition.
(14) The tire sealant according to (13), wherein breaking elongation (EB) at -20°C to 60°C is 1000% or more.
(15) The tire sealant according to (13) or (14), wherein maximum stress in a tension test at 60°C is 40 kPa or more, and maximum stress at -20°C is 400 kPa or more.
(16) The tire sealant according to any one of (13) to (15), wherein relaxation rate ΔG(t) measured by relaxation modulus measurement test performed at a measurement temperature of-20°C and initial strain of 300% is 1.0 or less.
(17) A tire comprising the tire sealant according to any one of (13) to (16).

### Effects of the Invention

According to the present invention, it is possible to provide a polymer blend which includes an organic polymer having a reactive silicon-containing group and which can give cured objects excellent in terms of elongation property and stress relaxation; a composition comprising the polymer blend, a specific filler, and a curing catalyst; a sealant comprising the composition; and a sealant for tires.

### PREFERRED MODE FOR CARRYING OUT THE INVENTION

### <<Polymer blend>>

A polymer blend contains an organic polymer having a reactive silicon-containing group shown in the general formula (1) below.

-SiR¹₁X₂ (1)

(In the formula, R¹ is a substituted or unsubstituted hydrocarbon group having 1 or more and 20 or less carbon atoms. X indicates a hydroxyl group or hydrolyzable group. Two of X may each be the same, or may be different.)

The polymer blend containing a polyoxyalkylene (A) and polyoxyalkylene (B), each satisfying predetermined conditions. It should be noted that the polymer blend may contain, in a range not inhibiting the object of the present invention, other organic polymers other than the polyoxyalkylene (A) and polyoxyalkylene (B), and various additives commonly used in various resin compositions conventionally. It should be noted that the composition containing the polymer blend, at least one filler selected from the group consisting of fillers of calcium carbonate, silica and carbon black, and a curing catalyst is defined as not corresponding to the polymer blend. In the disclosure of the present application, in the case of simply describing "composition", it indicates a composition containing a polymer blend, at least one filler selected from the group consisting of fillers of calcium carbonate, silica and carbon black, and a curing catalyst.

More specifically, for the organic polymer as the polyoxyalkylene (A), the number average molecular weight is 13,000 or higher and 100,000 or lower, the reactive silicon-containing group equivalent Eqa is 0.010 mml/g or more and 0.29 mmol/g or less, and the silicon groups per molecule is greater than 1. In addition, for the organic polymer as the polyoxyalkylene (B), the number average molecular weight is 3,000 or higher and 25,000 or lower, has a reactive silicon-containing group at only one end, and the reactive silicon-containing group equivalent Eqb is 0.03 mmol/g or more and 0.58 mmol/g or less.

This polyoxyalkylene (A) and polyoxyalkylene (B) are blended in the polymer blend so that the value of (R^{B}×Eqb)/(R^{A}×Eqa) is 1.9 or more and 7.0 or less, when defining the content of the polyoxyalkylene (A) in the polymer blend as R^{A} mass%, and defining the content of the polyoxyalkylene (B) in the polymer blend as R^{B} mass%. The value of (R^{B}×Eqb)/(R^{A}×Eqa) is preferably 3.7 or more and 7.0 or less.

By the polyoxyalkylene (A) and polyoxyalkylene (B) being blended into the polymer blend in the above-mentioned way, a polymer blend is obtained which can form a cured product exhibiting preferred values for tensile elongation, dynamic viscoelasticity, relaxation modulus, etc.

For the cured product of the polymer blend, the storage modulus G' measured at a frequency of 1 Hz at -20°C or higher and 80°C or lower is preferably 2 kPa or more and 0.5 MPa or less, and the loss tangent is preferably 0.3 or more and 2.0 or less. The storage modulus in the above-mentioned temperature range is preferably 2 kPa or more, more preferably 5 kPa or more, even more preferably 10 kPa or more, preferably 0.5 MPa or less, more preferably 0.4 MPa or less, and even more preferably 0.3 kPa or less. The loss tangent is preferably 0.3 or more, more preferably 0.35 or more, and even more preferably 0.4 or more, preferably 2.0 or less, more preferably 1.8 or less, and even more preferably 1.6 or less. When the storage modulus G' and loss tangent for the cured product of the polymer blend are values of the above-mentioned ranges, in a wide temperature range, the stress on the cured product tends to be mitigated, and in the case of the cured product greatly elongating and deforming at various weather conditions, damage such as tearing in the cured product hardly occurs.

The breaking elongation (EB) at 23°C of the cured product of the polymer blend is preferably 800% or more, more preferably 1000% or more, even more preferably 1200% or more, and particularly preferably 1500% or more. Although a larger value of the breaking elongation is better, it is realistically 2000% or less. For the cured product of the polymer blend, when the breaking elongation (EB) is a value of the above-mentioned range, it is possible to favorably elongate without damaging the cured product.

The gel fraction of the cured product of the polymer blend is preferably 0.5% or more and 40% or less, more preferably 0.5% or more and 20% or less, even more preferably 0.5% or more and 10% or less, and particularly preferably 0.5% or more and 5% or less. For the cured product of the polymer blend, the gel fraction being within the above-mentioned range indicates the polymer molecules in the cured product not being crosslinked to a high degree. For this reason, in the cured product of the polymer blend, when the gel fraction is within the above-mentioned range, it is difficult for the elongated and deformed cured product to return to the original shape. In other words, the elongated and deformed cured product tends to keep the shape after elongated and deforming. The gel fraction is not particularly limited so long as being a solvent in which the polyoxyalkylene is soluble. Irrespective of a nonpolar solvent or polar solvent, general organic solvents are usable such as acetone, methanol, toluene and hexane.

Hereinafter, the polyoxyalkylene (A) and polyoxyalkylene (B) will be explained.

### <Polyoxyalkylene (A)>

The polyoxyalkylene (A) is an organic polymer having a polyoxyalkylene main chain. It should be noted that the polyoxyalkylene main chain may contain an oxyalkylene structure and polymer structure other than an oxyalkylene structure, in a scope not inhibiting the effects of the present invention.

The number average molecular weight of the organic polymer as the polyoxyalkylene (A) is 13,000 or higher and 100,000 or lower, and preferably 13,000 or higher and 50,000 or lower. In addition, for the organic polymer as the polyoxyalkylene (A), the reactive silicon-containing group equivalent Eqa is 0.010 mmol/g or more and 0.29 mmol/g or less, preferably 0.015 mmol/g or more and 0.29 mmol/g or less, and the silicon-containing group per molecule is greater than 1.

When forming the cured product using the polymer blend containing the polyoxyalkylene (A) and polyoxyalkylene (B), or the composition containing this polymer blend, the molecules of the polyoxyalkylene (A) having the above-mentioned characteristics are crosslinked, while the polyoxyalkylene (B) having the reactive silicon-containing group at only one end, and having somewhat low molecular weight bonds to the terminal of the polyoxyalkylene (A).

As a result thereof, the polyoxyalkylene (A) and polyoxyalkylene (B) have very low crosslinking density, and come to give a cured product having very large molecular weight between crosslinking points. Therefore, the obtained cured product has a high elongation percentage. In addition, since the obtained cured product has very low crosslinking density, if the intertwining is unraveled by deformation, it exhibits favorable stress relaxation due to not returning to the original intertwined state.

The polyoxyalkylene (A) has the reactive silicon-containing group represented by the following general formula (1).

-SiR¹₁X₂ (1)

(In the formula, R¹ is a substituted or unsubstituted hydrocarbon group having 1 or more and 20 or less carbon atoms. X indicates a hydroxyl group or hydrolyzable group. Two of X may each be the same, or may be different.)

Specific examples of R¹ in the general formula (1) include an alkyl group such as methyl group or ethyl group; a cycloalkyl group such as cyclohexyl group; an aryl group such as phenyl group; an aralkyl group such as benzyl group; a fluoroalkyl group such as fluoromethyl group or difluoromethyl group; a chloroalkyl group such as chloromethyl group or 1-chloroethyl group; an alkoxyalkyl group such as methoxymethyl group, ethoxymethyl group, phenoxymethyl group, or 1-methoxyethyl group; an aminoalkyl group such as aminomethyl group, N-methylaminomethyl group, or N,N-dimethylaminomethyl group; an acetoxymethyl group, and a 2-cyanoethyl group. From the viewpoint of the availability of raw materials, a methyl group is more preferable among them.

In the case of X in the general formula (1) being a hydrolyzable group, a known hydrolyzable group can be exemplified as this hydrolyzable group. Specific examples of the hydrolyzable group include a hydrogen, a halogen, an alkoxy group, an alkenyloxy group, an aryloxy group, an acyloxy group, a ketoximate group, an amino group, an amide group, an acid amide group, an aminooxy group, and a mercapto group. Among them, due to high activity, a halogen, an alkoxy group, an alkenyloxy group, and an acyloxy group are preferable, and from the viewpoint of easy handleability by having mild hydrolyzability, an alkoxy group such as methoxy group or ethoxy group is more preferable, and a methoxy group and an ethoxy group are particularly preferable. Furthermore, in the case of an ethoxy group or an isopropenoxy group, the compound which is released according to the hydrolysis is ethanol and acetone, respectively, and they are preferable from the viewpoint of the safety.

Specific examples of the reactive silicon group represented by the general formula (1) include a dimethoxymethylsilyl group, a diethoxymethylsilyl group, a diisopropoxymethylsilyl group, a (chloromethyl)dimethoxysilyl group, a (methoxymethyl)dimethoxysilyl group, a (methoxymethyl)diethoxysilyl group, and an (ethoxymethyl)dimethoxysilyl group. Among them, a dimethoxymethylsilyl group and a diethoxymethylsilyl group are preferable in that a cured product with high strength can be obtained.

As the polyoxyalkylene polymer as the polyoxyalkylene (A), specific examples thereof include a polyoxyalkylene-based polymer such as polyoxyethylene, polyoxypropylene, polyoxybutylene, polyoxytetramethylene, a polyoxyethylene-polyoxypropylene copolymer, or a polyoxypropylene-polyoxybutylene copolymer.

The main chain structure of the polyoxyalkylene-based polymer may be composed of only one kind of repeat unit, or two or more kinds of repeat units.

Regarding the polyoxyalkylene polymer, the polymer containing reactive silicon groups is preferably composed of a polyoxypropylene-based polymer containing 50% by mass or more, and preferably 80% by mass or more of the oxypropylene repeat unit in the polymer main chain structure from the viewpoint of having amorphous property and relatively low viscosity.

As mentioned earlier, the main chain structure of the polyoxyalkylene polymer may have, within a range in which the effects of the present invention are not impaired, a polymer structure other than an oxyalkylene structure together with the oxyalkylene structure.

The main chain structure of the polyoxyalkylene polymer may be linear or have a branched chain. When a cured product with higher strength is desired, a branched chain polymer is preferable. When a cured product with higher elongation is desired, a linear polymer is preferable. When the polymer has a branched chain, the number of the branched chain bonded to the main chain is preferably 1 or more and 4 or less, and most preferably 1.

As for the polyoxyalkylene-based polymer, the polymer obtained by ring opening polymerization reaction of a cyclic ether compound, by using a polymerization catalyst in the presence of an initiator, is preferable.

Examples of the cyclic ether compound include ethylene oxide, propylene oxide, butylene oxide, tetramethylene oxide, tetrahydrofuran and the like. Only one kind of these cyclic ether compounds may be used, or two or more kinds may be used by combining. Of these cyclic ether compounds, propylene oxide is particularly preferable from the viewpoint that an amorphous polyether polymer having relatively low viscosity can be obtained.

Specific examples of the initiator include alcohols such as ethylene glycol, propylene glycol, butane diol, hexamethylene glycol, neopentyl glycol, diethylene glycol, dipropylene glycol, triethylene glycol, glycerol, trimethylolmethane, trimethylolpropane, pentaerythritol, sorbitol and the like; polyoxyalkylene polymer such as polyoxypropylene diol, polyoxypropylene triol, polyoxyethylene diol, and polyoxyethylene triol. Number average molecular weight of the polyoxyalkylene polymer is preferably 300 or higher and 4,000 or lower.

Examples of the method for synthesizing the polyoxyalkylene-based polymer include
1) a polymerization method using an alkali catalyst such as KOH;
2) a polymerization method using a transition metal compound-porphyrin complex catalyst such as a complex obtained by reacting an organic aluminum compound with porphyrin, as disclosed in JP 61-215623 A;
3) a polymerization method using a double metal cyanide complex catalyst, as disclosed in, for example, JP 46-27250 B, JP 59-15336 B, and US 3,278,457, US 3,278,458, US 3,278,459, US 3,427,256, US 3,427,334, and US 3,427,335;
4) a polymerization method using a catalyst containing a polyphosphagen salt, as disclosed in JP 10-273512 A; and
5) a polymerization method using a catalyst consisting of a phosphagen compound, as disclosed in JP 11-060722 A, and the method is not particularly limited.

The polymerization method using a double metal cyanide complex catalyst is more preferable due to the reasons like production costs and obtainment of organic polymers having a narrow molecular weight distribution.

The molecular weight distribution (Mw/Mn) of the polymer is not particularly limited. The molecular weight distribution is preferably narrow. The molecular weight distribution is preferably less than 2.0, more preferably 1.6 or less, even more preferably 1.5 or less, and particularly preferably 1.4 or less.

The number average molecular weight of the organic polymer as the polyoxyalkylene (A) is 13,000 or higher and 100,000 or lower, and preferably 13,000 or higher and 50,000 or lower, as mentioned previously. The number average molecular weight is a value of polystyrene conversion by GPC. The lower limit of the number average molecular weight is 13,000 or higher, and preferably 15,000 or higher. The upper limit of the number average molecular weight is 100,000 or less, preferably 50,000 or less, and even more preferably 35,000 or less. If the number average molecular weight of the organic polymer as the polyoxyalkylene (A) is within the above-mentioned range, the handleability of the polymer blend and the composition described later will be favorable, and in the case of curing the polymer blend or composition described later, it will be easy to obtain a cured product having high tensile elongation and low elastic modulus.

A method of introducing reactive silicon groups is not particularly limited, and a known method can be utilized. Examples of the introduction method are shown below.

(i) Hydrosilylation: It is a method in which an unsaturated bond is introduced first into a polymer to be a raw material (hereinbelow to be also indicated as "prepolymer"), and a hydrosilane compound is added to the unsaturated bond by a hydrosilylation reaction. As for the introduction method of the unsaturated bond, any method can be employed. For example, a method including reacting a prepolymer having a functional group such as a hydroxyl group with a compound which exhibits reactivity to the functional group and has an unsaturated group to obtain a polymer containing an unsaturated group, a method including copolymerization of a polymerizable monomer having an unsaturated bond, and the like can be mentioned.

(ii) Reaction of reactive group-containing polymer (prepolymer) and silane coupling agent: It is a method in which a prepolymer having a reactive group such as a hydroxyl group, an amino group, and an unsaturated bond is reacted with a compound having both a group that reacts with a reactive group of the prepolymer to form a bond and a reactive silicon group (also referred to as a silane coupling agent) can be mentioned. Examples of the combination of a reactive group of a prepolymer and a reactive group of a silane coupling agent include a hydroxyl group and an isocyanate group, a hydroxyl group and an epoxy group, an amino group and an isocyanate group, an amino group and a thioisocyanate group, an amino group and an epoxy group, Michael addition of an amino group and an acrylic structure, a carboxy group and an epoxy group, an unsaturated bond and a mercapto group and the like, but are not limited thereto.

The method of (i) is preferable since the reaction is convenient, the amount of the reactive silicon group to be introduced can be controlled, and the physical property of the reactive silicon group-containing polymer to be obtained is stable. The method of (ii) is preferable since it has many alternatives of the reaction and the introduction rate of the reactive silicon group can be easily increased.

Part of the hydrosilane compounds used for the method of (i) are exemplified. Halogenated silanes such as dichloromethylsilane, dichlorophenylsilane, and (methoxymethyl)dichlorosilane; alkoxysilanes such as dimethoxymethylsilane, diethoxymethylsilane, (chloromethyl)dimethoxysilane, and (methoxymethyl)dimethoxysilane; isopropenyloxysilanes (deacetone type) such as (chloromethyl)diisopropenyloxysilane, and (methoxymethyl)diisopropenyloxysilane can be mentioned.

As for the silane coupling agent that can be used in the method of (ii), the following compounds can be mentioned. Mercaptosilanes that react with unsaturated bond such as 3-mercaptopropyldimethoxymethylsilane, and mercaptomethyldimethoxymethylsilane; isocyanate silanes that react with a hydroxyl group such as 3-isocyanatopropyldimethoxymethylsilane and isocyanatomethyldimethoxymethylsilane; epoxy silanes that react with a hydroxyl group, an amino group, and a carboxylic acid group such as 3-glycidoxypropyldimethoxymethylsilane, and glycidoxymethyldimethoxymethylsilane; aminosilanes that react with isocyanate group and thioisocyanate group such as 3-aminopropyldimethoxymethylsilane, 3-(2-aminoethyl)propyldimethoxymethylsilane, and N-cyclohexylaminomethyldiethoxymethylsilane. The above-mentioned silane coupling agents are mere examples, and a silyl group can be introduced by using or applying a similar reaction.

Other components such as urethane bond component and the like may be contained in the main chain skeleton of the organic polymer as long as the effects of the present invention are not markedly impaired. The urethane bond component is not particularly limited, and a group generated by a reaction of an isocyanate group and an active hydrogen group (hereinbelow to be also referred to as an amide segment) can be mentioned.

A cured product obtained by curing a polymer blend or composition containing a polymer having a urethane bond or an ester bond in the main chain sometimes provides effects of high hardness and high strength due to the action of a hydrogen bond and the like. On the other hand, a urethane bond may be cleaved due to the heat and the like. To impart such property to a composition containing this polymer blend or the cured product, an amide segment may be introduced into the polymer or the amide segment may be intentionally eliminated. A polyoxyalkylene-based polymer having an amide segment tends to show high viscosity. Furthermore, a polyoxyalkylene-based polymer having an amide segment sometimes shows improved curability.

The above-mentioned amide segment is a group represented by the following general formula (2):

-NR²-C(=O)- (2)

(in which R² represents an organic group having 1 or more and 10 or less carbon atoms or a hydrogen atom).

The aforementioned amide segment specifically includes a urethane group produced by a reaction of an isocyanate group and a hydroxy group, or an amino group and carbonate; a urea group produced by a reaction of an isocyanate group and an amino group; a thiourethane group produced by a reaction of an isocyanate group and a mercapto group and the like. Furthermore, a group produced by a further reaction of active hydrogen in the above-mentioned urethane group, urea group, and thiourethane group, and an isocyanate group is also encompassed in the group of the general formula (2).

Examples of the industrially feasible production method of a polyoxyalkylene polymer having an amide segment and a reactive silicon group include a method including reacting a polyoxyalkylene polymer having an active hydrogen-containing group on the terminal with an excess polyisocyanate compound to obtain a polymer having an isocyanate group on the terminal of the polyurethane-based main chain, and thereafter or simultaneously therewith, reacting a part or whole of the isocyanate group with a Z group of a silicon compound that is represented by the general formula (3):

Z-R³-SiR¹₁X₂ (3)

(in which R¹, X and a are as defined above. R³ is a divalent organic group, and more preferably a hydrocarbon group having 1 or more and 20 or less carbon atoms. Z is an active hydrogen-containing group selected from a hydroxy group, a carboxy group, a mercapto group and an amino group (primary or secondary)).

In addition, a method in which a polyoxyalkylene polymer having an active hydrogen-containing group on the terminal is reacted with a reactive silicon group-containing isocyanate compound represented by the general formula (4) can be mentioned:

O=C=N-R³-SiR¹₁X₂ (4)

(in which R³, R¹, X and a are as defined above).

The silicon compound represented by the general formula (3) is not particularly limited. Specific examples thereof include amino group-containing silanes such as γ-aminopropyldimethoxymethylsilane, and N-(β-aminoethyl)-γ-aminopropyldimethoxymethylsilane. As disclosed in JP 6-211879 A (US 5,364,955), JP 10-53637 A (US 5,756,751), JP 10-204144 A (EP 0,831,108 B), JP 2000-169544 A, and JP 2000-169545 A, the Michael addition reaction product between various α,β-unsaturated carbonyl compounds and a primary amino group-containing silane and also the Michael addition reaction product between various (meth)acryloyl group-containing silanes and a primary amino group-containing compound can be used as the silicon compound represented by the general formula (3).

The reactive silicon group-containing isocyanate compound represented by the general formula (4) is not particularly limited. Specific examples thereof include γ-methyldimethoxysilylpropylisocyanate, γ-methyldiethoxysilylpropylisocyanate, γ-(methoxymethyl)dimethoxysilylpropylisocyanate, dimethoxymethylsilylmethylisocyanate, diethoxymethylsilylmethylisocyanate, and (methoxymethyl)dimethoxysilylmethylisocyanate.

When the main chain skeleton of the organic polymer contains an amide segment, the average number of the amide segment per 1 molecule is preferably 1 or more and 10 or less, more preferably 1.5 or more and 5 or less, and particularly preferably 2 or more and 3 or less. When the average number of the amide segment per 1 molecule is less than 1, curability may not be sufficient, and when the average number of the amide segment per 1 molecule is larger than 10, there is a possibility that the organic polymer has high viscosity and thus handling becomes difficult.

When it is desired to lower the viscosity of the polymer blend, or composition containing the polymer blend, improve workability, or the like, it is preferable that the main chain skeleton of the organic polymer substantially does not contain an amide segment.

The organic polymer as the polyoxyalkylene (A) may have two or more reactive silicon groups at one terminal site. As for the specific method for production, reference can be made to Patent Document (WO 2013/18020).

For the organic polymer as the polyoxyalkylene (A), the number of reactive silicon-containing groups contained in one molecule of the organic polymer is greater than 1, more preferably 1.1 or more, and particularly preferably 1.3 or more. In addition, for the organic polymer as the polyoxyalkylene (A), the reactive silicon-containing group equivalent Eqa is 0.010 mmol/g or more, preferably 0.015 mmol/g or more, more preferably 0.030 mmol/g or more, 0.29 mmol/g or less, and preferably 0.20 mmol/g or less. For the organic polymer as the polyoxyalkylene (A), the upper limit for the number of reactive silicon-containing groups contained in one molecule of the organic polymer is not particularly limited so long as the reactive silicon-containing group equivalent Eqa is within the above-mentioned range.

By using the polyoxyalkylene (A) having a reactive silicon-containing group of an amount satisfying such conditions, the crosslinking between molecules of the polyoxyalkylene (A) favorably progresses. As a result thereof, in the case of curing the polymer blend or composition containing the polymer blend, it will be easy to obtain a cured product having the desired tensile elongation and elastic modulus.

The average number of the reactive silicon groups to be contained in 1 molecule of the organic polymer is defined to be an average number obtained by quantification of protons on carbon, which is directly bonded to a reactive silicon group, by high resolution ¹H-NMR method. In the calculation of the average number of the reactive silicon groups that are contained in one molecule of the organic polymer, a prepolymer into which a reactive silicon group is not introduced and an organic polymer obtained by side reaction, into which a reactive silicon group is not introduced, during introduction of a reactive silicon group into a prepolymer, are also considered to be part of components of the organic polymer having the same main chain structure and the calculation is performed as they are included in the parameter (molecule number) of calculation of the average number of the reactive silicon groups in one molecule.

Only one kind of the organic polymer (A) may be used, or two or more kinds of the organic polymer (A) may be used in combination.

### <Polyoxyalkylene (B)>

The organic polymer as the polyoxyalkylene (B) is similar to the polyoxyalkylene (A) except for the number average molecular weight being 3,000 or higher and 25,000 or lower, having a reactive silicon-containing group at only one end, and the reactive silicon-containing group equivalent Eqb being 0.03 mmol/g or more and 0.58 mmol/g or less.

The lower limit for the number average molecular weight of the organic polymer as the polyoxyalkylene (B) is 3,000 or higher, and preferably 5,000 or higher. The upper limit for the number average molecular weight is 25,000 or less, preferably 14,000 or less, and even more preferably 13,500 or less. If the number average molecular weight of the organic polymer as the polyoxyalkylene (B) is within the above-mentioned range, the handleability of the polymer blend and the composition described later will be favorable, and in the case of curing the polymer blend or composition described later, it will be easy to obtain a cured product having high tensile elongation and low elastic modulus.

### <<Composition Containing Polymer Blend>>

Hereinafter, a composition containing the aforementioned polymer blend, at least one filler selected from the group consisting of fillers of calcium carbonate, silica and carbon black, and a curing catalyst will be explained. This composition gives a cured product which can be preferably used as a puncture prevention sealant for pneumatic tires.

Hereinafter, the polymer blend, filler and curing catalyst will be explained in order.

### <Polymer Blend>

The polymer blend is as previously mentioned.

### <Filler>

In the composition containing the polymer blend, at least one filler selected from the group consisting of calcium carbonate, silica and carbon black is blended.

As the calcium carbonate, it is possible to use heavy calcium carbonate, colloidal calcium carbonate, etc. without particular limitation. The calcium carbonate may be surface treated by a surface preparation agent. As the surface preparation agent, fatty acid or unsaturated fatty acid represented by palmitic acid, caprylic acid, capric acid, lauric acid, stearic acid, arachidic acid, behenic acid, lignoceric acid, oleic acid, linoleic acid, and linolenic acid; carboxylic acids and esters thereof such as rosin acid-based compounds; silane compounds such as hexamethyldisilazane, chlorosilane and aminosilane; paraffin-based compounds and the like can be exemplified. In the case of using a surface treated calcium carbonate, it is easy to suppress curing retardation of the composition. The particle size of the calcium carbonate is preferably 10 nm or larger and 10 µm or smaller as the volume average particle size, and is more preferably 50 nm or larger or 2 µm or smaller.

As the silica, known silicas such as fumed silica, precipitated silica, crystalline silica, and fused silica can be used without particular limitations. The particle size of the silica is not particularly limited in a range not inhibiting the object of the present invention. The particle size of the silica is preferably 3 nm or larger and 10 µm or smaller, and more preferably 5 nm or larger and 5 µm or smaller as the volume average particle size.

As the carbon black, known carbon black such as furnace black, Ketjen black, and acetylene black can be used without particular limitation. As the carbon black, carbon black which is resin coated, and surface treated by various dispersants can be used, in the point of an improvement in dispersiveness in the composition. For the carbon black, the oil absorption is preferably 100 mL/100 g or more. In addition, the BET specific surface area is preferably 80 m²/g or more. If the oil absorption and BET specific surface area are within the above-mentioned ranges, a composition having high thixotropy with the addition of a small amount of carbon black can be obtained. If a small amount added, it is preferable because it tends to realize favorable stress relaxation.

In the case of the filler being calcium carbonate, the content of calcium carbonate is preferably 0.1 vol.% or more and 15 vol.% or less, more preferably 0.5 vol.% or more and 13 vol.% or less, and particularly preferably 1.0 vol.% or more and 10 vol.% or less relative to the overall volume of composition. In the case of the filler being silica, the content of silica is preferably 0.1 vol.% or more and 5 vol.% or less, more preferably 0.3 vol.% or more and 4.0 vol.% or less, and particularly preferably 0.5 vol.% or more and 3.0 vol.% or less relative to the overall volume of composition. In the case of the filler being carbon black, the content of carbon black is preferably 0.1 vol.% or more and 10 vol.% or less, more preferably 0.3 vol.% or more and 8 vol.% or less, and particularly preferably 0.5 vol.% or more and 7 vol.% or less.

### <Curing Catalyst>

As the curing catalyst, a compound which is used as a catalyst for curing of an organic polymer having a reactive silicon-containing group is conventionally used.

As the curing catalyst, it is possible to arbitrarily use a known curing catalyst. As favorable curing catalysts, an amidine compound can be exemplified which is shown by the general formula (4):

R⁴N=CR⁵-NR⁶₂ (4)

in which R⁴, R⁵, and two R⁶ are each independently a hydrogen atom or organic group having 1 or more and 6 or less carbon atoms).

The amidine compound is not particularly limited, and examples thereof include pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine; imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one; amidine compounds such as 1,8-diazabicyclo[5.4.0]undec-7-ene (DBU), 1,5-diazabicyclo[4.3.0]non-5-ene, 2,9-diazabicyclo[4.3.0]non-1,3,5,7-tetraene, and 6-(dibutylamino)-1,8-diazabicyclo[5,4,0]undecene-7 (DBA-DBU); guanidine compounds such as guanidine, dicyandiamide, 1-methylguanidine, 1-ethylguanidine, 1-cyclohexylguanidine, 1-phenylguanidine, 1-(o-tolyl)guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-n-octyl-1,5,7-triazabicyclo[4.4.0]dec-5-ene; and biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-N2-ethylbiguanide, 1,1'-ethylenebisbiguanide, 1,5-ethylenebiguanide, 1-[3-(diethylamino)propyllbiguanide, 1-[3-(dibutylamino)propyl]biguanide, and N',N"-dihexyl-3,12-diimino-2,4,11,13-tetraazatetradecane diamidine. Among amidine compounds, 1,8-diazabicyclo[5.4.0]undec-7-ene (DBU) is preferable. DBU can also be used in the form in which it forms a salt with phenol or carboxylic acid.

Examples of preferred curing catalysts other than an amidine compound include metal carboxylates such as tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate; titanium compounds such as tetrabutyl titanate, tetrapropyl titanate, titanium tetrakis(acetylacetonate), bis(acetylacetonate)diisopropoxytitanium, and diisopropoxytitanium bis(ethylacetoacetate); organic tin-based compounds such as dibutyl tin dilaurate, dibutyl tin maleate, dibutyl tin phthalate, dibutyl tin dioctanoate, dibutyl tin bis(2-ethylhexanoate), dibutyl tin bis(methylmaleate), dibutyl tin bis(ethylmaleate), dibutyl tin bis(butylmaleate), dibutyl tin bis(octylmaleate), dibutyl tin bis(tridecylmaleate), dibutyl tin bis(benzylmaleate), dibutyl tin diacetate, dioctyl tin bis(ethylmaleate), dioctyl tin bis(octylmaleate), dibutyl tin dimethoxide, dibutyl tin bis(nonylphenoxide), dibutenyl tin oxide, dibutyl tin oxide, dibutyl tin bis(acetylacetonate), dibutyl tin bis(ethylacetoacetonate), reaction product of dibutyl tin oxide and a silicate compound, dioctyl tin bis(neodecanoate), dioctyl tin dilaurate, reaction product of dibutyl tin oxide and a phthalate and reaction product of dioctyl tin salt and ethyl orthosilicate; aluminum compounds such as aluminum tris(acetylacetonate), aluminum tris(ethylacetoacetate) and diisopropoxyaluminum ethylacetoacetate; zirconium compounds such as zirconium tetrakis(acetylacetonate); various metal alkoxides such as tetrabutoxy hafnium; organic acidic phosphoric ester; organic sulfonic acids such as trifluoromethanesulfonic acid; and inorganic acids such as hydrochloric acid, phosphoric acid, and boronic acid.

As the curing catalyst, one type may be used alone, or two or more types may be used in combination.

The blending amount of curing catalyst differs depending on the type of curing catalyst. Typically, the blending amount of curing catalyst is preferably 0.1 parts by mass or more and 30 parts by mass or less, more preferably 0.1 parts by mass or more and 12 parts by mass or less, and particularly preferably 0.1 parts by mass or more and 4 parts by mass or less, relative to 100 parts by mass of the aforementioned polymer blend. By using the curing catalyst in an amount within this range, upon curing the composition, it tends to achieve both favorable curability and favorable workability.

### <Plasticizer>

A plasticizer may be added to the composition. According to the addition of a plasticizer, it is possible to control the viscosity and slump properties of the composition and the mechanical properties such as hardness, tensile strength, and elongation of a cured product obtained by curing the composition. Specific examples of the plasticizer include phthalic acid ester compounds such as dibutyl phthalate, diisononyl phthalate (DINP), diheptyl phthalate, di(2-ethylhexyl) phthalate, diisodecyl phthalate (DIDP), or butylbenzyl phthalate; terephthalic acid ester compounds such as bis(2-ethylhexyl)-1,4-benzene dicarboxylate (specifically, Eastman 168 (product name) available from Eastman Chemical Company); non-phthalic acid ester compounds such as 1,2-cyclohexane dicarboxylic acid diisononyl ester (specifically, Hexamoll DINCH (product name) available from BASF); aliphatic polycarboxylic acid ester compounds such as dioctyl adipate, dioctyl sebacate, dibutyl sebacate, diisodecyl succinate, and acetyl tributyl citrate; unsaturated fatty acid ester compounds such as butyl oleate or methyl acetyl ricinoleate; alkyl sulfonic acid phenyl esters (specifically, Mesamoll (product name) available from Lanxess); phosphoric acid ester compounds such as tricresyl phosphate or tributyl phosphate; trimellitate compounds; chlorinated paraffins; hydrocarbon oils such as alkyl diphenyl or partially hydrogenated terphenyl; process oil; and epoxy plasticizers such as epoxidized soybean oil and benzyl epoxystearate.

Furthermore, a high molecular weight plasticizer can be also used. When a high molecular weight plasticizer is used, the initial physical properties can be maintained for a long period of time as compared to the use of a low molecular weight plasticizer. Furthermore, drying property (i.e., application property) when alkyd paint is applied to a cured product of the composition can be improved. Specific examples of the high molecular weight plasticizer include a vinyl polymer obtained by polymerization of a vinyl monomer by various methods; ester compounds of an aliphatic alcohol having two or more alcoholic hydroxyl groups such as diethylene glycol dibenzoate, triethylene glycol dibenzoate, and pentaerythritol ester; polyester-based plasticizer obtained from a dibasic acid such as sebacic acid, adipic acid, azelaic acid, and phthalic acid, and a divalent alcohol such as ethylene glycol, diethylene glycol, triethylene glycol, propylene glycol, and dipropylene glycol; polyethers such as polyether polyols having a number average molecular weight of 500 or more, further 1,000 or more, such as polyethylene glycol polypropylene glycol, and polytetramethylene glycol, derivatives in which the hydroxy group of these polyether polyols is converted to ester group, ether group and the like; polystyrenes such as polystyrene, and poly-α-methylstyrene; polybutadiene, polybutene, polyisobutylene, butadiene-acrylonitrile, and polychloroprene but are not limited thereto.

The amount used of plasticizer is preferably 3 parts by mass or more and 100 parts by mass or less, more preferably 5 parts by mass or more and 90 parts by mass or less, and particularly preferably 7 parts by mass or more and 70 parts by mass or less, relative to 100 parts by mass of the aforementioned polymer blend.

### <Solvent or diluent>

To the composition, a solvent or a diluent may be added. The solvent and diluent are not particularly limited, but aliphatic hydrocarbons, aromatic hydrocarbons, alicyclic hydrocarbons, halogenated hydrocarbons, alcohols, ester, ketones, ethers, or the like can be used. When a solvent or a diluent is used, in view of the air contamination problem when the composition is used inside, the boiling point of the solvent is preferably 150°C or higher, more preferably 200°C or higher, and particularly preferably 250°C or higher. The solvent or diluent may be used either singly or in combination of two or more types thereof.

### <Adhesiveness imparting agent>

The composition may be added with, as an adhesiveness imparting agent, a silane coupling agent, a reaction product of a silane coupling agent, or a compound other than silane coupling agents.

Specific examples of such silane coupling agent include epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; amino group-containing silane coupling agents such as γ-aminopropyltrimethoxysilane, γ-aminopropyltriethoxysilane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane, (aminomethyl)dimethoxymethylsilane, (aminomethyl)trimethoxysilane, (phenylaminomethyl)dimethoxymethylsilane, (phenylaminomethyl)trimethoxysilane, and bis(3-trimethoxysilylpropyl)amine; isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; carboxysilanes such as β-carboxyethyltriethoxysilane, β-carboxyethylphenylbis(β-methoxyethoxy)silane, and N-β-(carboxymethyl)aminoethyl-γ-aminopropyltrimethoxysilane; vinyl type unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; isocyanurate silanes such as tris(trimethoxysilyl)isocyanurate; carbamate silanes such as methyl (N-dimethoxymethylsilylmethyl)carbamate, methyl (N-trimethoxysilylmethyl)carbamate, methyl (N-dimethoxymethylsilylpropyl)carbamate, and methyl (N-trimethoxysilylpropyl)carbamate; alkoxy group-containing silanes such as (methoxymethyl)dimethoxymethylsilane, (methoxymethyl)trimethoxysilane, (ethoxymethyl)trimethoxysilane, and (phenoxymethyl)trimethoxysilane; and acid anhydride-containing silanes such as 3-(trimethoxysilyl)propylsuccinic anhydride, and 3-(triethoxysilyl)propylsuccinic anhydride. In addition, partial condensates of these silanes, and modified derivatives of these silanes, such as amino-modified silyl polymer, silylated amino polymer, unsaturated aminosilane complex, phenylamino long chain alkylsilane, aminosilylated silicone, and silylated polyester can also be used as silane coupling agents. The silane coupling agent may be used either singly or in combination of two or more types thereof. The reaction product of silane coupling agent includes a reaction product of isocyanate silane and a hydroxyl group-containing compound, an amino group-containing compound or the like; a Michael addition reaction product of aminosilane; a reaction product of aminosilane and an epoxy group-containing compound; a reaction product of epoxy silane and a carboxylic acid group-containing compound, an amino group-containing compound or the like.

The amount used on silane coupling agent is preferably 0.1 parts by mass or and 20 parts by mass or less, and more preferably 0.5 parts by mass or more and 10 parts by mass or less, relative to 100 parts by mass of the aforementioned polymer blend.

Specific examples of the adhesiveness imparting agent other than the silane coupling agent include, although not particularly limited, epoxy resin, phenol resin, sulfur, alkyl titanates, and aromatic polyisocyanate. The adhesiveness imparting agent may be used either singly or two or more types of them may be used as a mixture. By adding those adhesiveness imparting agents, adhesiveness to an adherend can be improved.

### <Silicate>

The composition may be added with silicate. The silicate has a function to improve durability of a cured product which is obtained from the composition. As for the silicate, tetraalkoxysilane and alkylalkoxysilane, or a partially hydrolyzed condensate thereof can be used.

Specific examples of the silicate include tetraalkoxysilane (tetraalkylsilicate) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, or tetra-t-butoxysilane, and a partially hydrolyzed condensate thereof.

The partially hydrolyzed condensate of tetraalkoxysilane is more preferred because the effect of improving recovery property, durability, and creep resistance of a cured product of the curable composition is higher than that of tetraalkoxysilane.

Examples of the partially hydrolyzed condensate of tetraalkoxysilane include a condensate which is obtained by adding water to tetraalkoxysilane followed by partial hydrolysis and condensation according to a common method. As for the partially hydrolyzed condensate of an organosilicate compound, a commercially available product can be used. Examples of the condensate include methyl silicate 51 and ethyl silicate 40 (both manufactured by COLCOAT CO., LTD.).

In the case of using silicate, the amount used thereof is preferably 0.5 parts by mass or more and 30 parts by mass or less, and more preferably 1.0 parts by mass or more and 25 parts by mass or less, relative to 100 parts by mass of the aforementioned polymer blend.

### <Anti-sagging agent>

The composition may contain an anti-sagging agent, as necessary, to prevent sagging and improve workability. While the anti-sagging agent is not particularly limited, for example, polyamide wax; hydrogenated castor oil derivatives; metal soaps such as calcium stearate, aluminum stearate, barium stearate and the like can be mentioned as examples. When a rubber powder having a particle size of 10 µm or larger and 500 µm or smaller as described in Japanese Unexamined Patent Application, Publication No. H11-349916 or an organic fiber as described in Japanese Unexamined Patent Application, Publication No. 2003-155389 is used, a composition showing high thixotropy and good workability can be obtained. Such anti-sagging agent may be used either singly, or two or more kinds thereof may be used in combination. The amount of the anti-sagging agent to be used is preferably 0.1 parts by mass or more and 20 parts by mass or less relative to 100 parts by mass of the aforementioned polymer blend.

### <Antioxidant (anti-aging agent)>

The composition may be added with an antioxidant (anti-aging agent). When an anti-oxidant is used, weather resistance of a cured product can be enhanced. Examples of the anti-oxidant include hindered phenol-based anti-oxidant, monophenol-based anti-oxidant, bisphenol-based anti-oxidant, and polyphenol-based anti-oxidant, and hindered phenol-based anti-oxidant is particularly preferable. Similarly, hindered amine light stabilizer such as Tinuvin 622 LD, Tinuvin 144; CHIMASSORB944LD, CHIMASSORB119FL (each of the above manufactured by Ciba Japan K.K.); ADK STAB LA-57, ADK STAB LA-62, ADK STAB LA-67, ADK STAB LA-63, and ADK STAB LA-68 (each of the above is manufactured by ADEKA CORPORATION); Sanol LS-770, Sanol LS-765, Sanol LS-292, Sanol LS-2626, Sanol LS-1114, and Sanol LS-744 (each of the above is manufactured by Sankyo Lifetech Co., Ltd.), and the like can also be used. Specific examples of the anti-oxidant are also recited in Japanese Unexamined Patent Application, Publication No. H4-283259 and Japanese Unexamined Patent Application, Publication No. H9-194731.

The amount of the antioxidant to be used is preferably 0.1 parts by mass or more and 10 parts by mass or less, and particularly preferably 0.2 parts by mass or more and 5 parts by mass or less relative to 100 parts by mass of the aforementioned polymer blend.

### <Light stabilizer>

The composition may be added with a light stabilizer. Use of a light stabilizer prevents degradation of a cured product caused by photooxidation. Examples of the light stabilizer include benzotriazole-based light stabilizers, hindered amine-based light stabilizers, benzoate-based light stabilizers and the like, and a hindered amine-based light stabilizer is particularly preferable.

The amount used of light stabilizer is preferably 0.1 parts by mass or more and 10 parts by mass or less, and more preferably 0.2 parts by mass or more and 5 parts by mass or less, relative to 100 parts by mass of the aforementioned polymer blend.

### <UV absorber>

The composition may be added with a UV absorber. When a UV absorber is used, weather resistance of the surface of a cured product can be enhanced. Examples of the UV absorber include benzophenone-based UV absorbers, benzotriazole-based UV absorbers, salicylate-based UV absorbers, substituted tolyl-based UV absorbers and metal chelate-based UV absorbers, and oxanilide-based compounds such as commercially available SABO STAB UV312 (manufactured by SABO). Benzotriazole-based compound is particularly preferable, and trade names Tinuvin P, Tinuvin 213, Tinuvin 234, Tinuvin 326, Tinuvin 327, Tinuvin 328, Tinuvin 329, and Tinuvin 571 (all manufactured by BASF) can be mentioned. Particularly preferred is a 2-(2H-1,2,3-benzotriazol-2-yl)-phenol-based compound. Furthermore, a combined use of a phenol-based or hindered phenol-based antioxidant, and a hindered amine-based light stabilizer, and a benzotriazole-based UV absorber is preferable.

The amount used of UV absorber is preferably 0.1 parts by mass or more and 10 parts by mass or less, and more preferably 0.2 parts by mass or more and 5 parts by mass or less, relative to 100 parts by mass of the organic polymer (A). The above-mentioned anti-oxidant, light stabilizer and UV absorber can be suitably selected depending on use temperature, exposure environment, transparency requirement, or the like.

### <Physical property modifying agent>

The composition may be added with a physical property modifying agent, as necessary, that controls the tensile property of a cured product to be generated. The physical property modifying agent is not particularly limited, but examples thereof include alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane, and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate, and tris(triethylsilyl) borate; silicone varnish; polysiloxanes and the like. By using the physical property modifying agent, the hardness of the composition after curing may be increased or conversely decreased to improve elongation at break. Only one kind of the above-mentioned physical property modifying agent may be used, or two or more kinds thereof may be used in combination.

Particularly, a compound which generates a compound having a monovalent silanol group in a molecule by hydrolysis has an activity of lowering the modulus of the cured product without worsening the stickiness of the surface of the cured product. Particularly, a compound which generates trimethylsilanol is preferable. As a compound which generates a compound having a monovalent silanol group in a molecule by hydrolysis, a compound described in JP 5-117521 A can be mentioned as an example. In addition, a compound that forms a silicon compound to generate R3SiOH such as trimethylsilanol and the like by hydrolysis, which is a derivative of alkyl alcohol such as hexanol, octanol, decanol and the like, a compound that forms a silicon compound to generate R3SiOH such as trimethylsilanol and the like by hydrolysis, which is a derivative of polyvalent alcohol having not less than 3 hydroxyl groups, such as trimethylolpropane, glycerol, pentaerythritol, sorbitol and the like as described in Japanese Unexamined Patent Application, Publication No. H11-241029 can be mentioned as an example.

Furthermore, a compound that forms a silicon compound to generate R₃SiOH such as trimethylsilanol and the like by hydrolysis, which is a derivative of an oxypropylene polymer described in Japanese Unexamined Patent Application, Publication No. H7-258534 can be mentioned as an example. Furthermore, polyoxyalkylene-based polymer having a crosslinkable hydrolyzable silicon group and a silicon group, which can be a monosilanol-containing compound by hydrolysis as described in Japanese Unexamined Patent Application, Publication No. H6-279693, can also be used.

### <Photocurable substance>

The composition may be added with photocurable substance. When a photocurable substance is used, a film of the photocurable substance is formed on the surface of the cured product, and thus the stickiness and weather resistance of the cured product can be improved. The photocurable substance causes chemical changes of the molecular structure in a considerably short time and produces physical changes such as curing by the action of light. As such kinds of compounds, many are known such as organic monomer, oligomer, resin, and compositions containing the same, and any commercially available product can be employed. As a representative photocurable substance, unsaturated acrylic compounds, polyvinyl cinnamates, azide resins and the like can be used. Examples of the unsaturated acrylic compound include monomers, oligomers or mixtures thereof, having one to several acrylic or methacrylic unsaturated groups, which are monomers such as propylene (or butylene, ethylene) glycol di(meth)acrylate, and neopentyl glycol di(meth)dimethacrylate, or oligoesters having a molecular weight of 10,000 or less. Specific examples include special acrylate (bifunctional) Aronix M-210, Aronix M-215, Aronix M-220, Aronix M-233, Aronix M-240, Aronix M-245; (trifunctional) Aronix M305, Aronix M-309, Aronix M-310, Aronix M-315, Aronix M-320, Aronix M-325, and (polyfunctional) Aronix M-400 and the like, and particularly, a compound containing an acrylic functional group is preferable, and a compound containing three or more same functional groups on average in one molecule is preferable (all Aronix recited above are a product of Toagosei Co., Ltd.).

Examples of polyvinyl cinnamate include a photosensitive resin having a cinnamoyl group as a photosensitive group, in which polyvinyl alcohol is esterified by cinnamic acid, and many other polyvinyl cinnamate derivatives are also exemplified. Azide resin is known to be a photosensitive resin containing an azide group as a photosensitive group. Azide resin is generally a rubber photosensitive liquid added with a diazide compound as a photosensitizer, and detailed examples are disclosed in "Photosensitive Resin" (published by Insatsu Gakkai Shuppanbu Ltd., page 93-, page 106-, page 117-, published on March 17, 1972). They can be used singly or mixed and added with a sensitizer as necessary and used. Incidentally, when a sensitizer such as ketones and nitro compound or a promoter such as amines is added, the effect is sometimes enhanced.

The amount of the photocurable substance to be used is preferably 0.1 parts by mass or more and 20 parts by mass or less, and more preferably 0.5 parts by mass or more and 10 parts by mass or less, relative to 100 parts by mass of the aforementioned polymer blend.

### <Oxygen curable substance>

The composition may be added with an oxygen curable substance. As the oxygen curable substance, an unsaturated compound reactive with oxygen in the air can be mentioned as an example. The oxygen curable substance exhibits actions such as preventing of stickiness of the surface and attachment of dust or dirt to the surface of the cured product by reacting with oxygen in the air and forming of a cured film near the surface of the cured product. Specific examples of the oxygen curable substance include dry oil represented by tung oil, linseed oil and the like, various alkyd resins obtained by modifying a corresponding compound; acrylic polymer, epoxy resin and silicone resin, each modified by dry oil; liquid polymers such as 1,2-polybutadiene, 1,4-polybutadiene, and C5 to C8 diene polymer obtained by polymerization or copolymerization of diene compounds such as butadiene, chloroprene, isoprene, and 1,3-pentadiene, liquid copolymers such as NBR and SBR obtained by copolymerization of monomers such as acrylonitrile and styrene, which are copolymerizable with those diene compounds, such that the diene compound becomes the main component, and various modified products of the above (maleic modified products, boil oil modified products and the like) and the like. They may be used either singly, or two or more kinds thereof may be used in combination. Of these, tung oil and liquid diene polymer are particularly preferable. Furthermore, combined use of a catalyst promoting the oxidation curing reaction or a metal dryer may enhance the effect thereof. As such catalyst and metal dryer, metal salts such as cobalt naphthenate, lead naphthenate, zirconium naphthenate, cobalt octylate, and zirconium octylate, amidine compound and the like can be mentioned as an example.

The use amount of the oxygen curable substance is preferably within a range of 0.1 parts by mass or more and 20 parts by mass or less, and more preferably 0.5 parts by mass or more and 10 parts by mass or less relative to 100 parts by mass of the aforementioned polymer blend.

### <Flame-retardant>

The composition may be added with a flame-retardant including a phosphorus flame-retardant such as ammonium polyphosphate and tricresyl phosphate, aluminum hydroxide, magnesium hydroxide, thermally expandable graphite and the like. The above-mentioned flame-retardant may be used either singly, or two or more kinds thereof may be used in combination.

The amount used of flame-retardant is preferably 3 parts by mass or more and 200 parts by mass or less, and more preferably 5 parts by mass or more and 100 parts by mass or less, relative to 100 parts by mass of the aforementioned polymer blend.

### <Various additives>

The curable composition may be added with various additives as necessary to control various physical properties of a curable composition or a cured product. Examples of such additives include a radical inhibitor, a metal deactivator, an antiozonant, a phosphorus peroxide decomposer, a lubricant, a pigment, a foaming agent, a solvent, a fungicide, and the like. These various additives may be used either singly, or two or more kinds thereof may be used in combination. Specific examples of the additives other than those recited in this specification are described in each publication of JP 4-69659 B, JP 7-108928 B, JP 63-254149 A, JP 64-22904 A, JP 2001-72854 A and the like.

### <<Method for producing curable composition>>

The composition can also be prepared as a one-component type to be cured by moisture in the air after application by previously blending all components to be blended, and preserving the same after tight sealing. In addition, the curable composition can also be prepared as a two-component type to be used by mixing a blending material with a polymer composition before use in which components such as a separate curing catalyst as a curing agent, a filler, a plasticizer, and water are blended in advance.

When the curable composition is a one-component type, all components to be blended are blended in advance. For this reason, components containing moisture to be blended are preferably dehydrated and dried before use, or dehydrated under reduced pressure or the like during blending by kneading. When the curable composition is a two-component type, a curing catalyst does not need to be added to a main agent containing a aforementioned polymer blend. For this reason, even when the blended component contains some moisture, there is little chance of having gellation. However, when storage stability over a long period of time is necessary, it is preferable to have dehydration and drying of the blended component. As for the dehydrating and drying method, in the case of a solid such as powder, a heating drying method is preferable, and in the case of a liquid, a reduced pressure dehydrating method, or a dehydrating method using synthetic zeolite, activated alumina, silica gel, and the like is preferable. In addition, it is also possible to perform dehydration by adding a small amount of an isocyanate compound to allow a reaction of the isocyanate group and water. The storage stability is further enhanced by adding lower alcohol such as methanol and ethanol; alkoxysilane compounds such as n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane, in addition to the dehydrating and drying method.

The use amount of a dehydrating agent, particularly silicon compounds capable of reacting with water such as vinyltrimethoxysilane, is preferably 0.1 parts by mass or more and 20 parts by mass or less, and particularly preferably 0.5 parts by mass or more and 10 parts by mass or less relative to 100 parts by mass of the aforementioned polymer blend.

The production method of the composition is not particularly limited. For example, it is possible to have a conventional method including blending the above-mentioned components, kneading the mixture using a mixer, a roll, a kneader, an extruder or the like at ambient temperature or under heating, or a method including dissolving the above-mentioned components in a small amount of a solvent followed by mixing.

The above explained composition can be preferably used as a sealing material composition, which forms a sealing material for preventing circulation of fluid such as liquid or air in cracks or pinholes in various articles. As others, it is possible to use in a cohesive, adhesive, molding agent, vibration insulating material, vibration damper, acoustic insulating material, foaming material, paint, spraying material, waterproofing agent for a coating film, and the like The above explained composition can be particularly preferably used in the formation of a tire sealant. The above-mentioned composition gives a cured product superior in elongation and stress relaxation; therefore, a tire sealant formed using the above-mentioned composition exerts a superior effect in puncture prevent.

### <<Sealant>>

The above explained composition and cured product of this composition can be used as sealant. The sealant is constructed by a method such as coating, pasting or injecting (filling) on a surface or in a space at which a gap, crack, pinhole or the like can occur, with the object of achieving an airtight or watertight state, an object of soundproofing, insulating or the like. The sealant is typically formed by curing the aforementioned composition. The sealant is preferably used as a sealing material for preventing the circulation of a fluid such as liquid or gas in cracks or pinholes in various articles. For example, by coating the present sealant on a concreate surface used in buildings, it becomes possible to prevent leakage from cracks occurring by drying shrinkage or the like. In addition, by coating the present sealant so as to straddle or fill between various panels of the interior and exterior of buildings and interior and exterior of automobiles, it is possible to water leakage or leaking of air from gaps between panels occurring due to thermal expansion, vibration, loosening of panel fasteners, and also maintain the soundproofing or thermal insulation performance. Furthermore, by coating the present sealant on a surface or the like of a thermal insulator or laminate glass, it is possible to suppress a decline in the thermal insulation performance due to being able to suppress the infiltration or discharge of gas even in the case of a through hole or crack occurring therein. Usage examples of these show one example, and it is possible to use as a seal material which prevents the outflow and inflow of gas or liquid, and prevents a decline in thermal insulation or sound proofing by being coating on the inner surface and/or outer surface of a target object to by fill the gaps in the target object and prevent cracks and through holes from occurring during use. The above-mentioned sealant is particularly preferably used as a tire sealant, as mentioned earlier.

The tire sealant is normally a film or sheet form. The thickness of the tire sealant is not particularly limited, and is appropriately determined according to the design of the tire. The thickness of the tire sealant typically is preferably 0.5 mm or more and 10 mm or less, and more preferably 2.0 mm or more and 5.0 mm or less.

The breaking elongation (EB) of the tire sealant is preferably 1000% or more, more preferably 1200% or more, and particularly preferably 1500% or more, from the viewpoint of favorable punction prevention performance. Although a larger value of the breaking elongation is better, it is realistically 2000% or less. In the case of the tire sealant exhibiting such a breaking elongation (EB), even if a foreign object such as a nail sticks into the tire, a puncture is prevented due to the tire sealant favorably stretching without breaking, according to the shape of the foreign object. The breaking elongation (EB) can be measured by performing a tension test, using a test piece obtained by punching out a dumbbell shape 3 in accordance with JIS K 6251. Regarding the conditions of the tension test, the pulling speed is 400 mm/min, the temperature is -20°C to 60°C, and the relative humidity is 50%.

The maximum stress at 60°C of the tire sealant is desirably 40 kPa or more, and more preferably 60 kPa or more. In addition, the maximum stress at -20°C is desirably 400 kPa or less, and more preferably 350 kPa or less. The maximum stress can be measured by performing a tension test using a test piece obtained by punching out a dumbbell shape 3 in accordance with JIS K 6251. Regarding the conditions of the tension test, the pulling speed is 400 mm/min, the temperature is -20°C to 60°C, and the relative humidity is 50%. If the maximum stress for the tire sealant is a value of the above-mentioned range, in the case of the sealant stretching due to a foreign object such as a nail stuck in the tire, a split or the like in the sealant hardly occurs.

The relaxation rate ΔG(t) measured by the relaxation modulus measurement test of the tire sealant is preferably 1.0 or less, and more preferably 0.9 or less. Regarding the conditions of the relaxation modulus measurement test, the measurement temperature is -20°C, and the initial strain is 300%. If the relaxation rate ΔG(t) for the tire sealant is a value of the above-mentioned range, the stress acting on the sealant is promptly relaxed, and in the case of the sealant stretching due to a foreign object such as a nail stuck in the tire, a split or the like in the sealant hardly occurs.

### «Tire»

The tire includes the aforementioned tire sealant. As the configuration of the tire, so long as being able to apply the aforementioned tire sealant, it is possible to appropriately adopt the configuration of various conventionally known tires.

In the case of the tire including the aforementioned tire sealant, by the tire sealant having a large breaking elongation, even in the case of a foreign object such as a nail sticking in the tire, the tire sealant stretches without breaking, and thus puncture is prevented. In addition, in the case of the above-mentioned tire sealant having high stress relaxation performance and stretching, it can maintain the shape after stretching. For this reason, even if continuing travel in a state with a foreign object such as a nail stuck in the tire, breakage hardly occurs in the tire sealant.

In other words, the vehicle equipped with tires including the aforementioned tire sealant can travel without problems for a certain long time, even in the case of a foreign object such as a nail being stuck in the tire.

The position at which the sealant is provided to the tire is a position other than the position at which directly contacting with the road surface, and is not particularly limited so long as the desired puncture prevention performance is obtained. It is preferable for the tire sealant to normally be provided to the surface on an inner side of the tire, i.e. the back side to the face at which the tread part is provided. The tire sealant may be provided as an intermediate layer in the layered structure of a tire. In addition, it is preferable for the tire sealant to be provided to the entire body including positions corresponding to the tread part, sidewall, bead part, etc. The tire sealant may be provided to only a position corresponding to the tread part at which there is the most opportunities for a foreign object such as a nail to stick.

The method of providing the aforementioned tire sealant to the tire is not particularly limited. For example, the tire sealant may be provided at a position where the tire sealant is provided in the tire by coating the aforementioned composition and allowing to cure. In addition, a film or sheet created in advance using the aforementioned composition may be made into the tire sealant and pasted at the desired position of the tire. The method of pasting is not particularly limited, and may be a method such as thermocompression bonding, and may use a well-known adhesive or the like.

### EXAMPLES

The present invention is explained in greater detail in the followings by referring to specific Examples, but the present invention is not limited to the following Examples.

### (Synthesis Example 1: Synthesis of Polymer (A-1))

Using a polyoxypropylene diol having a number average molecular weight of 2,000 as an initiator, polymerization of propylene oxide was carried out with a zinc hexacyanocobaltate glyme complex catalyst to obtain a polyoxypropylene diol of about 28,500 number average molecular weight. Then, a solution of NaOMe in methanol was added in an amount of 1.2 equivalents to hydroxyl groups of this hydroxyl-terminated polyoxypropylene diol, the methanol was distilled off, and the terminal hydroxyl group was converted to an allyl group by further adding 3-chloro-1-propene. Next, 36 ppm platinum divinyldisiloxane complex (3 mass% isopropanol solution calculated as platinum) was added to the obtained 100 parts by mass of the allyl-terminated polyoxypropylene, and then 0.96 parts by mass of dimethoxymethylsilane was slowly dropwise added thereto under stirring. After reacting this mixed solution for 2 hours at 90°C, the unreacted dimethoxymethyl silane was distilled off under reduced pressure, thereby obtaining a linear polyoxypropylene (A-1) in which the terminal is a dimethoxymethylsilyl group (DMS), and having an average of 1.6 silicon groups per molecule, 0.056 mmol/g silicon group equivalent, and number average molecular weight of 28,500.

It should be noted that the number average molecular weight (Mn), weight average molecular weight (Mw) and molecular weight distribution (Mw/Mn) of the polymer (A-1) are values measured using an HLC-8120GPC by TOSOH Corporation as the solvent delivery system, TSK-GEL H type by TOSOH Corporation as the column, THF as the solvent and polystyrene as the standard. The following Mn, Mw and Mw/Mn will represent the same.

### (Synthesis Example 2: Synthesis of Polymer (A-4))

Using a polyoxypropylene diol having a number average molecular weight of 2,000 as an initiator, polymerization of propylene oxide was carried out with a zinc hexacyanocobaltate glyme complex catalyst to obtain a polyoxypropylene diol of about 28,500 number average molecular weight. Then, a solution of NaOMe in methanol was added in an amount of 1.2 equivalents to hydroxyl groups of this hydroxyl-terminated polyoxypropylene diol, the methanol was distilled off, and the terminal hydroxyl group was converted to an allyl group by further adding 3-chloro-1-propene. Next, 72 ppm platinum divinyldisiloxane complex (3 mass% isopropanol solution calculated as platinum) was added to the obtained 100 parts by mass of the allyl-terminated polyoxypropylene, and then 1.48 parts by mass of triethoxysilane was slowly dropwise added thereto under stirring. This mixed solution was reacted for 2 hours at 90°C. Furthermore, the terminal ethoxy group was converted to a methoxy group by adding 20 parts by mass of ethanol and 12 ppm HC1, thereby obtaining a linear polyoxypropylene (A-4) in which the terminal is a trimethoxysilyl group (TMS), and having an average of 1.6 silicon groups per molecule, 0.056 mmol/g silicon group equivalent, and number average molecular weight of 28,500.

### (Synthesis Example 3: Synthesis of Polymer (B-1))

With butanol as an initiator, polymerization of propylene oxide was carried out with a zinc hexacyanocobaltate glyme complex catalyst to obtain polyoxypropylene oxide of 7,000 number average molecular weight. Then, a solution of NaOMe in methanol was added in an amount of 1.2 equivalents to hydroxyl groups of this hydroxyl-terminated polyoxypropylene oxide, the methanol was distilled off, and the terminal hydroxyl group was converted to an allyl group by further adding 3-chloro-1-propene. Next, 36 ppm platinum divinyldisiloxane complex (3 mass% isopropanol solution calculated as platinum) was added to the obtained 100 parts by mass of the allyl-terminated polyoxypropylene polymer, and then 1.72 parts by mass of dimethoxymethylsilane was slowly dropwise added thereto under stirring. By reacting this mixed solution for 2 hours at 90°C, a linear reactive polyoxypropylene polymer (B-1) was obtained in which the terminal is a dimethoxymethylsilyl group (DMS), and having an average of 0.7 silicon groups per molecule, and number average molecular weight of 7,000.

### (Synthesis Example 4: Synthesis of Polymer (B-3))

With butanol as an initiator, polymerization of propylene oxide was carried out with a zinc hexacyanocobaltate glyme complex catalyst to obtain polyoxypropylene oxide of 7,000 number average molecular weight. Then, a solution of NaOMe in methanol was added in an amount of 1.2 equivalents to hydroxyl groups of this hydroxyl-terminated polyoxypropylene oxide, the methanol was distilled off, and the terminal hydroxyl group was converted to an allyl group by further adding 3-chloro-1-propene. Next, 72 ppm platinum divinyldisiloxane complex (3 mass% isopropanol solution calculated as platinum) was added to the obtained 100 parts by mass of the allyl-terminated polyoxypropylene polymer, and then 2.66 parts by mass of triethoxysilane was slowly dropwise added thereto under stirring. This mixed solution was reacted for 2 hours at 90°C. Furthermore, the terminal ethoxy group was converted to a methoxy group by adding 20 parts by mass of ethanol and 12 ppm HCl, thereby obtaining a linear polyoxypropylene (B-3) in which the terminal is a trimethoxysilyl group, and having an average of 0.7 silicon groups per molecule, 0.10 mmol/g silicon group equivalent, and number average molecular weight of 7,000.

### (Synthesis Example 5: Synthesis of Polymer (P-1))

To a reactor in a deoxygenation state were added 0.72 parts by mass of copper(I) bromide, 13.4 parts by mass of butyl acrylate, 5.0 parts by mass of ethyl acrylate and 1.6 parts by mass of stearyl acrylate, and then was heated while stirring. Then, 8.8 parts by mass of acetonitrile as a polymerization solvent and 1.50 parts by mass of diethyl 2,5-dibromoadipate as an initiator were added and mixed, and pentamethyldiethylene triamine (hereinafter abbreviated as triamine) was added at a stage adjusting the temperature of the mixed solution to about 80°C to start the polymerization reaction. Next, 53.6 parts by mass of butyl acrylate, 20 parts by mass of ethyl acrylate and 6.4 parts by mass of stearyl acrylate were sequentially added to progress the polymerization reaction. In the middle of polymerization, the polymerization rate was adjusted by adding triamine as appropriate. The total amount of triamine used during polymerization was 0.15 parts by mass. At the moment when the monomer conversion ratio (polymerization reaction rate) was about 95% or higher, the volatile component was removed by degassing at reduced pressure to obtain the polymer condensate.

To the above condensate, 21 parts by mass of 1,7-octadiene and 35 parts by mass of acetonitrile were added, and 0.34 parts by mass of triamine was further added. Octadiene was reacted at the polymer terminus by heating and stirring for several hours while adjusting the internal temperature to about 80°C to about 90°C. The acetonitrile and unreacted octadiene were removed by degassing at reduced pressure to obtain a condensate containing polymer having a terminal alkenyl group.

The above condensate was diluted with toluene, then after adding a filtration aid, absorbent (KYOWAAD 700SEN manufactured by Kyowa Chemical Industry Co., Ltd.) and hydrotalcite (KYOWAAD 500SH manufactured by Kyowa Chemical Industry Co., Ltd.), and heating and stirring at about 80 to 100°C, the solid components were filtered and removed. The filtrate was condensed under reduced pressure to obtain the polymer crude product.

The polymer crude product, thermal stabilizer (SUMILIZER GS, manufactured by Sumitomo Chemical), and absorbent (KYOWAAD 700SEN, KYOWAAD 500SH) were added, degassed under reduced pressure, and the temperature was raised while heating and stirring, and the heating and stirring, and degassing under reduced pressure were performed for several hours in a high temperature state of about 170°C to about 200°C. After diluting with butyl acetate, filtering and removing the absorbent, the filtrate was condensed to obtain a polymer having alkenyl groups at both terminals.

Then, 300 ppm platinum divinyldisiloxane complex (3 mass% isopropanol solution calculated as platinum) and 0.9 parts by mass of trimethyl orthoformate were added to the o 100 parts by mass of polymer obtained by the above method, and then 1.7 parts by mass of dimethoxymethylsilane was slowly dropwise added thereto under stirring. After reacting this mixed solution for 1 hour at 100°C, the unreacted dimethoxymethyl silane was distilled off under reduced pressure, thereby obtaining a linear reactive silicon-group containing acrylate ester-based polymer (P-1) in which the terminal is a dimethoxymethylsilyl group, and having an average of 1.6 silicon groups per molecule, 0.059 mmol/g silicon group equivalent, and number average molecular weight of 27,000.

### (Synthesis Example 6: Synthesis of Polymer (Q-1))

To a reactor in a deoxygenation state were added 0.72 parts by mass of copper(I) bromide, 13.4 parts by mass of butyl acrylate, 5.0 parts by mass of ethyl acrylate and 1.6 parts by mass of stearyl acrylate, and then was heated while stirring. Then, 8.8 parts by mass of acetonitrile as a polymerization solvent and 2.0 parts by mass of ethyl 2-boromobutyrate as an initiator were added and mixed, and pentamethyldiethylene triamine (hereinafter abbreviated as triamine) was added at a stage adjusting the temperature of the mixed solution to about 80°C to start the polymerization reaction. Next, 53.6 parts by mass of butyl acrylate, 20 parts by mass of ethyl acrylate and 6.4 parts by mass of stearyl acrylate were sequentially added to progress the polymerization reaction. In the middle of polymerization, the polymerization rate was adjusted by adding triamine as appropriate. The total amount of triamine used during polymerization was 0.15 parts by mass. At the moment when the monomer conversion ratio (polymerization reaction rate) was about 95% or higher, the volatile component was removed by degassing at reduced pressure to obtain the polymer condensate.

To the above condensate, 21 parts by mass of 1,7-octadiene and 35 parts by mass of acetonitrile were added, and 0.34 parts by mass of triamine was further added. Octadiene was reacted at the polymer terminal by heating and stirring for several hours while adjusting the internal temperature to about 80°C to about 90°C. The acetonitrile and unreacted octadiene were removed by degassing at reduced pressure to obtain a condensate containing polymer having a terminal alkenyl group.

The above condensate was diluted with toluene, then after adding a filtration aid, absorbent (KYOWAAD 700SEN manufactured by Kyowa Chemical Industry Co., Ltd.) and hydrotalcite (KYOWAAD 500SH manufactured by Kyowa Chemical Industry Co., Ltd.), and heating and stirring at about 80 to 100°C, the solid components were filtered and removed. The filtrate was condensed under reduced pressure to obtain the polymer crude product.

The polymer crude product, thermal stabilizer (SUMILIZER GS, manufactured by Sumitomo Chemical), and absorbent (KYOWAAD 700SEN, KYOWAAD 500SH) were added, degassed under reduced pressure, and the temperature was raised while heating and stirring, and the heating and stirring, and degassing under reduced pressure were performed for several hours in a high temperature state of about 170°C to about 200°C. After diluting with butyl acetate, filtering and removing the absorbent, the filtrate was condensed to obtain a polymer having alkenyl groups at both terminals.

Then, 300 ppm platinum divinyldisiloxane complex (3 mass% isopropanol solution calculated as platinum) and 0.9 parts by mass of trimethyl orthoformate were added to the 100 parts by mass of polymer obtained by the above method, and then 11.9 parts by mass of dimethoxymethylsilane was slowly dropwise added thereto under stirring. After reacting this mixed solution for 1 hour at 100°C, the unreacted dimethoxymethyl silane was distilled off under reduced pressure, thereby obtaining a linear reactive silicon-group containing acrylate ester-based polymer (Q-1) in which the terminal is a dimethoxymethylsilyl group, and having an average of 0.9 silicon groups per molecule, 0.13 mmol/g silicon group equivalent, and number average molecular weight of 7,100.

### (Synthesis Examples 7 to 9)

Polyoxypropylenes (A-2), (A-3) and (A-5) were obtained by the same method as Synthesis Example 1, so as to make the compositions shown in Table 1 or Table 4.

### (Synthesis Example 10)

Polyoxypropylene (B-2) was obtained by the same method as Synthesis Example 3, so as to make the composition shown in Table 1.

### [Example 1]

After mixing 100 parts by mass of the polyoxypropylene (A-1) having a reactive silicon-containing group at both terminals obtained in Synthesis Example 1, and 200 parts by mass of the polyoxypropylene (B-1) having a reactive silicon-containing group at one terminal obtained in Synthesis Example 3, 2 parts by mass of A-171 which is a dehydrating agent (vinyltrimethoxysilane manufactured by Momentive), 3 parts by mass of KBM-603 which is an adhesion imparting agent (N-(β-aminoethyl) -γ-aminopropyltrimethoxysilane manufactured by Shin-Etsu Chemical Co., Ltd.), and 3 parts by mass of NEOSTANN U-220H which is a tin compound (dibutyl tin bis(acetylacetonate) manufactured by Nitto Kasei Co., Ltd.) were mixed to obtain a composition. The reactive silicon-containing group equivalent ratio ((R^{B}×Eqb)/(R^{A}×Eqa)) of the polymer (A-1) to polymer (B-1) is 3.6.

### (Tension Test)

The cured product was obtained by filling the obtained composition into a mold made of polyethylene of 2 mm thickness so as to have no air bubbles, and curing for 7 days at 23°C and 50% relative humidity. A dumbbell shape 3 was punched out in accordance with JIS K 6251 from the obtained cured product, and the tension test was performed (pulling speed 200 mm/min, 23° C, 50% relative humidity) to measure the modulus when 100% stretched (M100), breaking strength (TB) and breaking elongation (EB). The evaluation results are noted in Table 1.

### (Viscoelastic Test)

The cured product was obtained by filling the obtained composition into a mold made of polyethylene of 2 mm thickness so as to have no air bubbles, and curing for 7 days at 23°C and 50% relative humidity. A 1 cm × 1 cm test piece was prepared, and using a parallel disk of 8 mm diameter in a jig, the dynamic viscoelasticity measurement (measurement instrument: ARES manufactured by TA Instruments) was performed in the range of -50°C to 100°C. The measurement frequency was set to 1 Hz. G' at -20°C and 80°C (storage modulus) and the loss tangent (tanδ) are noted in Table 1.

### (Relaxation Modulus)

The cured product was obtained by filling the obtained composition into a mold made of polyethylene of 2 mm thickness so as to have no air bubbles, and curing for 7 days at 23°C and 50% relative humidity. A 1 cm × 1 cm test piece was prepared, and using a parallel disk of 8 mm diameter in a jig, measurement of the relaxation modulus (G(t)) was performed giving 30% distortion at 0°C. The time required to relax 20% from the initial relaxation modulus was defined as t(80%), and the time required to relax 30% was defined as t(70%). The evaluation results are noted in Table 1.

### (Measurement of Gel Fraction)

The cured product was obtained by filling the obtained composition into a mold made of polyethylene of 2 mm thickness so as to have no air bubbles, and curing for 7 days at 23°C and 50% relative humidity. A 3 cm × 3 cm test piece was placed on a wire net, and immersed for 1 week in acetone. Thereafter, it was dried for 2 hours at 50°C, and the mass of the gel content was calculated. The evaluation results are noted in Table 1.

### [Examples 2 to 5, and Comparative Examples 1 to 8]

Evaluation was performed by the same methods as Example 1, other than mixing additives with the polymer at the blending ratios shown in Table 1 or 2. In Comparative Example 8, diisononyl phthalate (manufactured by J-Plus Co., Ltd.) was used as a plasticizer. It should be noted that, for Example 5, since the cured product was brittle and soft, evaluations other than gel fraction were not performed. In addition, for Comparative Example 3, due to not being able to prepare the cured material, evaluations other than gel fraction were not performed. The evaluation results are noted in Table 1 or Table 2.

**[Table 1]**

| | | Example | | | | |
|---|---|---|---|---|---|---|
| | | 1 | 2 | 3 | 4 | 5 |
| Polymer (A) | Type | A-1 | A-2 | A-3 | A-1 | A-1 |
| | Parts by mass | 100 | 100 | 100 | 100 | 80 |
| | Type of silicon-containing group | DMS | DMS | DMS | DMS | DMS |
| | Number average molecular weight | 28500 | 25500 | 14600 | 28500 | 28500 |
| | Silicon-containing group (per molecule) | 1.6 | 1.4 | 1.6 | 1.6 | 1.6 |
| | Eqa (mmol/g) | 0.056 | 0.055 | 0.110 | 0.056 | 0.056 |
| Polymer (B) | Type | B-1 | B-1 | B-1 | B-2 | B-1 |
| | Parts by mass | 200 | 198 | 396 | 420 | 220 |
| | Type of silicon-containing group | DMS | DMS | DMS | DMS | DMS |
| | Number average molecular weight | 7000 | 7000 | 7000 | 14600 | 7000 |
| | Silicon-containing group (per molecule) | 0.7 | 0.7 | 0.7 | 0.7 | 0.7 |
| | Eqb (mmol/g) | 0.100 | 0.100 | 0.100 | 0.048 | 0.100 |
| Plasticizer (DINP⁽¹⁾) | Parts by mass | - | - | - | - | - |
| Dehydrating agent (A-171⁽²⁾) | Parts by mass | 2 | 2 | 2 | 2 | 2 |
| Adhesiveness imparting agent (KBM-603⁽³⁾) | Parts by mass | 3 | 3 | 3 | 3 | 3 |
| Tin compound (NEOSTANN U-220H⁽⁴⁾) | Parts by mass | 3 | 3 | 3 | 3 | 3 |
| (R^{B}×Eqb)/(R^{A}×Eqa) | | 3.6 | 3.6 | 3.6 | 3.6 | 4.9 |
| Tensile test | M100(MPa) | 0.02 | 0.01 | 0.01 | 0.02 | - |
| | TB(MPa) | 0.13 | 0.03 | 0.07 | 0.16 | - |
| | EB (%) | 1430 | 1755 | 1270 | 1570 | - |
| Viscoelastic test | G' -20°C (MPa) | 0.07 | 0.12 | 0.06 | 0.07 | - |
| | G' 80°C (MPa) | 0.003 | 0.005 | 0.004 | 0.003 | - |
| | tanδ -20°C | 0.50 | 0.65 | 0.77 | 0.78 | - |
| | tanδ -80°C | 0.98 | 1.01 | 0.69 | 0.90 | - |
| Relaxation modulus | t_{(80%)}(s) | 8 | 8 | 25 | 2 | - |
| | t_{(70%)}(s) | 114 | 110 | 300 | 34 | - |
| (G(t), 0°C) | | | | | | |
| Gel fraction | (%) | 3 | 3 | 4 | 3 | 0.5 |

| | | | | | | |
|---|---|---|---|---|---|---|
| (1): diisononyl phthalate (J-Plus Co., Ltd.) (2): vinyltrimethoxysilane (Momentive) (3): N-(2-aminoethyl) -3-aminopropyltrimethoxysilane (Shin-Etsu Chemical Co., Ltd.) (4): dibutyl tin diaceto acetonate (Nitto Kasei Co., Ltd.) | | | | | | |

**[Table 2]**

| | | Comparative example | | | | | | | |
|---|---|---|---|---|---|---|---|---|---|
| | | 1 | 2 | 3 | 4 | 5 | 6 | 7 | 8 |
| Polymer (A) | Type | A-1 | A-1 | A-1 | A-1 | A-4 | A-4 | A-1 | - |
| | Parts by mass | 100 | 100 | 60 | 100 | 100 | 100 | 100 | - |
| | Type of silicon-containing group | DMS | DMS | DMS | DMS | TMS | TMS | DMS | - |
| | Number average molecular weight | 28500 | 28500 | 28500 | 28500 | 28500 | 28500 | 28500 | - |
| | Silicon-containing group (per molecule) | 1.6 | 1.6 | 1.6 | 1.6 | 1.6 | 1.6 | 1.6 | - |
| | Eqa (mmol/g) | 0.056 | 0.056 | 0.056 | 0.056 | 0.056 | 0.056 | 0.056 | - |
| Polymer (B) | Type | B-1 | B-1 | B-1 | B-3 | B-3 | B-1 | - | - |
| | Parts by mass | 100 | 50 | 240 | 200 | 200 | 200 | - | - |
| | Type of silicon-containing group | DMS | DMS | DMS | TMS | TMS | DMS | - | - |
| | Number average molecular weight | 7000 | 7000 | 7000 | 7000 | 7000 | 7000 | - | - |
| | Silicon-containing group (per molecule) | 0.7 | 0.7 | 0.7 | 0.7 | 0.7 | 0.7 | - | - |
| | Eqb (mmol/g) | 0.100 | 0.100 | 0.100 | 0.100 | 0.100 | 0.100 | - | - |
| Polymer (P) | Type | - | - | - | - | - | - | - | P-1 |
| | Parts by mass | - | - | - | - | - | - | - | 100 |
| | Type of silicon-containing group | - | - | - | - | - | - | - | DMS |
| | Number average molecular weight | - | - | - | - | - | - | - | 27000 |
| | Silicon-containing group (per molecule) | - | - | - | - | - | - | - | 1.6 |
| | Eqp (mmol/g) | - | - | - | - | - | - | - | 0.059 |
| Polymer (Q) | Type | - | - | - | - | - | - | - | Q-1 |
| | Parts by mass | - | - | - | - | - | - | - | 163 |
| | Type of silicon-containing group | - | - | - | - | - | - | - | DMS |
| | Number average molecular weight | - | - | - | - | - | - | - | 7100 |
| | Silicon-containing group (per molecule) | - | - | - | - | - | - | - | 0.9 |
| | Eqq (mmol/g) | - | - | - | - | - | - | - | 0.130 |
| Plasticizer (DINP⁽¹⁾) | Parts by mass | - | - | - | - | - | - | 200 | - |
| Dehydrating agent (A-171⁽²⁾) | Parts by mass | 2 | 2 | 2 | 2 | 2 | 2 | 2 | 2 |
| Adhesiveness imparting agent (KBM-603⁽³⁾) | Parts by mass | 3 | 3 | 3 | 3 | 3 | 3 | 3 | 3 |
| Tin compound | Parts by mass | 3 | 3 | 3 | 0.5 | 0.3 | 0.5 | 2 | 3 |
| (NEOSTANN U-220H⁽⁴⁾) | | | | | | | | | |
| (R^{B}×Eqb)/(R^{A}×Eqa) | | 1.8 | 0.9 | 7.1 | 3.6 | 3.6 | 3.6 | - | 3.6 |
| Tensile test | M100(MPa) | 0.05 | 0.12 | - | 0.06 | 0.07 | 0.03 | 0.05 | - |
| | TB(MPa) | 0.16 | 0.35 | - | 0.22 | 0.19 | 0.18 | 0.30 | 0.08 |
| | EB (%) | 700 | 668 | - | 480 | 350 | 660 | 786 | 90 |
| Viscoelastic test | G'-20°C (MPa) | 0.16 | 0.24 | - | 0.08 | 0.08 | 0.07 | 0.02 | 0.52 |
| | G'80°C (MPa) | 0.041 | 0.110 | - | 0.055 | 0.062 | 0.024 | 0.020 | 0.055 |
| | tanδ -20°C | 0.38 | 0.29 | - | 0.40 | 0.38 | 0.54 | 0.32 | 1.07 |
| | tanδ -80°C | 0.38 | 0.23 | - | 0.08 | 0.05 | 0.21 | 0.08 | 0.04 |
| Relaxation modulus (G(t), 0°C) | t_{(80%)}(s) | 573 | >1000 | - | >1000 | >1000 | >1000 | >1000 | >1000 |
| | t_{(70%)}(s) | >1000 | >1000 | - | >1000 | >1000 | >1000 | >1000 | >1000 |
| Gel fraction | (%) | 43 | 65 | <0.1 | 79 | 80 | 64 | 33 | 65 |

| | | | | | | | | | |
|---|---|---|---|---|---|---|---|---|---|
| (1): diisononyl phthalate (J-Plus Co., Ltd.) (2): vinyltrimethoxysilane (Momentive) (3): N-(2-aminoethyl) -3-aminopropyltrimethoxysilane (Shin-Etsu Chemical Co., Ltd.) (4): dibutyl tin diaceto acetonate (Nitto Kasei Co., Ltd.) | | | | | | | | | |

By comparison of Examples 1 to 4 and Comparative Examples 1 to 3, it is understood that elongation of the cured product was sufficiently large and relaxation was favorable, so long as the ratio of reactive silicon-containing group equivalents ((R^{B}×Eqb)/(R^{A}×Eqa)) of the polymer (A) (polyoxyalkylene (A) to the polymer (B) (Polyoxyalkylene (B)) was 1.9 or more and no 7.0 or less. In addition, the relaxation was favorable so long as the storage modulus G' at -20°C to 80°C of the cured product was 2 kPa or more and 0.5 MPa or less, the loss tangent (tanδ) at -20°C to 80°C was 0.3 or more and 2.0 or less, and the gel fraction was 0.5% or more and 40% or less.

Although the G' of Comparative Example 7 was sufficiently low, the relaxation was not sufficient due to the value of tanδ at -20°C to 80°C being low. In addition, the relaxation was not sufficient when using a tri-functional reactive silicon group-containing polyoxyalkylene as shown in Comparative Examples 4 to 6.

From Comparative Example 8, it is understood that a cured product with sufficient relaxation could not be formed, in the case of using a reactive silicon-group containing acrylate ester-based polymer as polymer (A) and polymer (B).

### [Example 6]

Relative to 100 parts by mass of the polyoxypropylene (A-1) having reactive silicon-containing groups at both terminals obtained in Synthesis Example 1, 200 parts by mass of the polyoxypropylene (B-1) having a reactive silicon-containing group at one terminal obtained in Synthesis Example 3, 3 parts by mass of R-972 (surface treated dry silica manufactured by Nippon Aerosil Co., Ltd.) and 1 part by mass of Irganox245 (antioxidant manufactured by BASF) were added to a twin-axis mixer (manufactured by Inoue Mfg., Inc.), and stirred for 2 hours while reducing pressure with a low speed stirring of 110 rpm, and high speed stirring of 1600 rpm. After cooling to no more than 50°C, 2 parts by mass of vinyltrimethoxysilane (trade name: A-171, manufactured by Momentive) as a dehydrating agent, 3 parts by mass of N-(β-aminoethyl) -γ-aminopropyltrimethoxysilane (trade name: KBM-603, manufactured by Shin-Etsu Chemical Co., Ltd.) as an adhesion imparting agent, and 3 parts by mass of dibutyl tin bis(acetylacetonate) (trade name: NEOSTANN U-220H, manufactured by Nitto Kasei Co., Ltd.) as a tin compound were added and kneaded, and after filling into a moisture-proof cartridge-type container, was sealed to obtain a one-component curing composition. The reactive silicon-containing group equivalent ratio of polymer (A-1) to polymer (B-1), i.e. ((R^{B}×Eqb)/(R^{A}×Eqa)), was 3.6. The volume fraction of filler (silica) was 0.4%.

### (Viscosity)

Under a 50% relative humidity atmosphere at 23°C, the viscosity when the revolution speed was 2 rpm and 20 rpm was measured using a BH-type viscometer with Rotor No. 7 (manufactured by Toki Sangyo Co., Ltd.). The measurement results are noted in Table 3.

### (Tension Test)

Evaluation was performed by the same method as Example 1. The measurement results are noted in Table 3.

### (Viscoelastic Test)

Evaluation was performed by the same method as Example 1. The measurement results are noted in Table 3.

### (Relaxation Modulus)

The cured product was obtained by filling the obtained composition into a mold made of polyethylene of 2 mm thickness so as to have no air bubbles, and curing for 7 days at 23°C and 50% relative humidity. A 1 cm × 1 cm test piece was prepared, and using a parallel disk of 8 mm diameter in a jig, measurement of the relaxation modulus was performed giving 30% distortion at 50°C. The time required to relax 20% from the initial relaxation modulus was defined as t(80%), and the time required to relax 30% was defined as t(70%). The measurement results are noted in Table 3.

### (Gel Fraction)

Evaluation was performed by the same method as Example 1. It should be noted that measurement of the gel fraction was not performed on Examples 12 to 18 prepared using carbon black. The evaluation results are noted in Table 3.

### [Examples 7 to 18]

Compositions were prepared by the same method as Example 6, other than mixing additives with the polymer at the blending ratios shown in Table 3 or 4. It should be noted that a fatty acid amide wax (manufactured by ARKEMA) was used as a thixotropy imparting agent. In addition, in Examples 12 to 18, dioctyl tin bis(acetylacetonate) (trade name: TIBKAT223, manufactured by Nitto Kasei Co., Ltd.) was used as a tin compound. In Example 13 and Example 14, the tensile test was not performed due to not being able to create a dumbbell-shaped test piece. The evaluation results are noted in Tables 3 and 4.

It should be noted that the types of fillers listed in Table 3 and Table 4 are as follows. Si1: R-972 (surface treated wet silica, manufactured by Nippon Aerosil Co., Ltd.).
Ca1: Hakuenka CCR (surface treated calcium carbonate, manufactured by Shiraishi Industry Co., Ltd.)
CB1: carbon black (oil absorption 105 mL/100 mg, BET specific surface area 80 m²/g, manufactured by Orion Engineered Carbons)
CB2: carbon black (oil absorption 110 mL/100 mg, BET specific surface area 123 m²/g, manufactured by Orion Engineered Carbons)
CB3: carbon black (oil absorption 97 mL/100 mg, BET specific surface area 70 m²/g, manufactured by Orion Engineered Carbons)
CB4: carbon black (oil absorption 95 mL/100 mg, BET specific surface area 270 m²/g, manufactured by Orion Engineered Carbons)
   In addition, the types of tin compound listed in Table 3 and Table 4 are as follows. TC1: dibutyl tin diaceto acetonate (Nitto Kasei Co., Ltd.)
TC2: dioctyl tin diaceto acetonate (Nitto Kasei Co., Ltd.)

**[Table 3]**

| | | | Exampler | | | | | | |
|---|---|---|---|---|---|---|---|---|---|
| | | | 6 | 7 | 8 | 9 | 10 | 11 | 12 |
| Polymer (A) | | Type | A-1 | A-1 | A-1 | A-1 | A-1 | A-1 | A-1 |
| | | Parts by mas | 100 | 100 | 100 | 100 | 100 | 100 | 100 |
| | | Type of silicon-containing group | DMS | DMS | DMS | DMS | DMS | DMS | DMS |
| | | Specific Gravity | 1.01 | 1.01 | 1.01 | 1.01 | 1.01 | 1.01 | 1.01 |
| | | Number average molecular weight | 28500 | 28500 | 28500 | 28500 | 28500 | 28500 | 28500 |
| | | Silicon-containing group (per molecule) | 1.6 | 1.6 | 1.6 | 1.6 | 1.6 | 1.6 | 1.6 |
| | | Eqa (mmol/g) | 0.056 | 0.056 | 0.056 | 0.056 | 0.056 | 0.056 | 0.056 |
| Polymer (B) | | Type | B-1 | B-1 | B-1 | B-1 | B-1 | B-1 | B-1 |
| | | Parts by mas | 200 | 200 | 200 | 200 | 200 | 200 | 200 |
| | | Type of silicon-containing group | DMS | DMS | DMS | DMS | DMS | DMS | DMS |
| | | Specific Gravity | 1.01 | 1.01 | 1.01 | 1.01 | 1.01 | 1.01 | 1.01 |

| | Number average molecular weight | | 7000 | 7000 | 7000 | 7000 | 7000 | 7000 | 7000 |
|---|---|---|---|---|---|---|---|---|---|
| | Silicon-containing group (per molecule) | | 0.7 | 0.7 | 0.7 | 0.7 | 0.7 | 0.7 | 0.7 |
| | Eqb (mmol/g) | | 0.100 | 0.100 | 0.100 | 0.100 | 0.100 | 0.100 | 0.100 |
| Filler | | Type | Si1 | Si1 | Si1 | Ca1 | Ca1 | Ca1 | CB1 |
| | | Parts by mass | 3 | 20 | 40 | 60 | 100 | 200 | 45 |
| | | Specific gravity | 2.2 | 2.2 | 2.2 | 2.8 | 2.8 | 2.8 | 1.8 |
| Thixotropy imparting agent (Crayvallac SLT⁽⁵⁾) | | Parts by mass | - | - | - | 5 | 5 | 5 | 5 |
| | | Specific gravity | 1.02 | 1.02 | 1.02 | 1.02 | 1.02 | 1.02 | 1.02 |
| Antioxidant (Irganox 245⁽⁶⁾) | | Parts by mass | 1 | 1 | 1 | 1 | 1 | 1 | 1 |
| | | Specific gravity | 1.02 | 1.02 | 1.02 | 1.02 | 1.02 | 1.02 | 1.02 |
| Dehydrating agent (A-171⁽²⁾) | | Parts by mass | 2 | 2 | 2 | 2 | 3 | 3 | 3 |
| | | Specific gravity | 0.97 | 0.97 | 0.97 | 0.97 | 0.97 | 0.97 | 0.97 |
| Adhesiveness imparting agent (KBM-603⁽³⁾) | | Parts by mass | 3 | 3 | 3 | 3 | 3 | 3 | 3 |
| | | Specific gravity | 1.03 | 1.03 | 1.03 | 1.03 | 1.03 | 1.03 | 1.03 |
| Tin compound | | Type | TC1 | TC1 | TC1 | TC1 | TC1 | TC1 | TC2 |
| | | Parts by mass | 3 | 3 | 3 | 3 | 3 | 3 | 3.5 |
| | | Specific gravity | 1.22 | 1.22 | 1.22 | 1.22 | 1.22 | 1.22 | 1.22 |
| (R^{B}×Eqb)/(R^{A}×Eqa) | | | 3.6 | 3.6 | 3.6 | 3.6 | 3.6 | 3.6 | 3.6 |
| Filler content (Vol.%) | | | 0.4 | 2.9 | 5.6 | 6.0 | 10 | 19 | 7 |
| Viscosity Pa·s (23°C) | 2rpm | | 12 | 124 | 442 | 250 | 450 | 1280 | 590 |
| | 20rpm | | 10 | 37 | 117 | 65 | 100 | 240 | 110 |
| Tensile test | M100 (MPa) | | 0.013 | 0.040 | 0.040 | 0.030 | 0.035 | 0.058 | 0.044 |
| | TB (MPa) | | 0.17 | 0.35 | 0.32 | 0.25 | 0.30 | 0.33 | 0.30 |
| | EB (%) | | 1800 | 1440 | 1240 | 1778 | 1590 | 1328 | 1440 |
| Viscoelastic test | G' -20°C (MPa) | | 0.056 | 0.17 | 0.35 | 0.19 | 0.29 | 0.53 | 0.18 |
| | G' 80°C (MPa) | | 0.008 | 0.025 | 0.040 | 0.020 | 0.027 | 0.058 | 0.028 |
| | tanδ -20°C | | 0.54 | 0.47 | 0.52 | 0.55 | 0.53 | 0.50 | 0.51 |
| | tanδ -80°C | | 0.63 | 0.40 | 0.45 | 0.54 | 0.50 | 0.53 | 0.40 |
| Relaxation modulus (G(t), 50°C) | t_{(80%)}(s) | | 2 | 11 | 111 | 20 | 25 | 100 | 15 |
| | t_{(70%)}(s) | | 53 | 359 | >1000 | 405 | 500 | >1000 | 900 |
| Gel fraction | (%) | | 7 | 7 | 28 | 8 | 23 | 48 | - |

| | | | | | | | | | |
|---|---|---|---|---|---|---|---|---|---|
| (2): vinyltrimethoxysilane (Momentive) (3): N-(2-aminoethyl) -3-aminopropyltrimethoxysilane (Shin-Etsu Chemical Co., Ltd.) (5): fatty acid amide wax (ARKEMA) (6): hindered phenol-based anti-oxidant (BASF) | | | | | | | | | |

**[Table 4]**

| | | | Example | | | | | |
|---|---|---|---|---|---|---|---|---|
| | | | 13 | 14 | 15 | 16 | 17 | 18 |
| Polymer (A) | | Type | A-1 | A-1 | A-1 | A-1 | A-1 | A-1 |
| | | Parts by mas | 60 | 60 | 60 | 60 | 60 | 60 |
| | | Type of silicon-containing group | DMS | DMS | DMS | DMS | DMS | DMS |
| | | Specific Gravity | 1.01 | 1.01 | 1.01 | 1.01 | 1.01 | 1.01 |
| | | Number average molecular weight | 28500 | 28500 | 28500 | 28500 | 28500 | 28500 |
| | | Silicon-containing group (per molecule) | 1.6 | 1.6 | 1.6 | 1.6 | 1.6 | 1.6 |
| | | Eqa (mmol/g) | 0.056 | 0.056 | 0.056 | 0.056 | 0.056 | 0.056 |
| Polymer (A) | Type | | A-5 | A-5 | A-5 | A-5 | A-5 | A-5 |
| | Parts by mas | | 40 | 40 | 40 | 40 | 40 | 40 |
| | Type of silicon-containing group | | DMS | DMS | DMS | DMS | DMS | DMS |
| | Specific Gravity | | 1.01 | 1.01 | 1.01 | 1.01 | 1.01 | 1.01 |
| | Number average molecular weight | | 28500 | 28500 | 28500 | 28500 | 28500 | 28500 |
| | Silicon-containing group (per molecule) | | 1.2 | 1.2 | 1.2 | 1.2 | 1.2 | 1.2 |
| | Eqa (mmol/g) | | 0.042 | 0.042 | 0.042 | 0.042 | 0.042 | 0.042 |
| Polymer (B) | Type | | B-1 | B-1 | B-1 | B-1 | B-1 | B-1 |
| | Parts by mas | | 200 | 200 | 200 | 200 | 200 | 200 |
| | Type of silicon-containing group | | DMS | DMS | DMS | DMS | DMS | DMS |
| | Specific Gravity | | 1.01 | 1.01 | 1.01 | 1.01 | 1.01 | 1.01 |
| | Number average molecular weight | | 7000 | 7000 | 7000 | 7000 | 7000 | 7000 |
| | Silicon-containing group (per molecule) | | 0.7 | 0.7 | 0.7 | 0.7 | 0.7 | 0.7 |
| | Eqb (mmol/g) | | 0.100 | 0.100 | 0.100 | 0.100 | 0.100 | 0.100 |
| Filler | | Type | CB1 | CB1 | CB1 | CB2 | CB3 | CB4 |
| | | Parts by mass | 30 | 45 | 70 | 30 | 30 | 30 |
| | | Specific gravity | 1.8 | 1.8 | 1.8 | 1.8 | 1.8 | 1.8 |
| Thixotropy imparting agent (Crayvallac SLT⁽⁵⁾) | | Parts by mass | 5 | 5 | 5 | 5 | 5 | 5 |
| | | Specific gravity | 1.02 | 1.02 | 1.02 | 1.02 | 1.02 | 1.02 |
| Antioxidant (Irganox 245⁽⁶⁾) | | Parts by mass | 1 | 1 | 1 | 1 | 1 | 1 |
| | | Specific gravity | 1.02 | 1.02 | 1.02 | 1.02 | 1.02 | 1.02 |
| Dehydrating agent (A-171⁽²⁾) | | Parts by mass | 3 | 3 | 3 | 3 | 3 | 3 |
| | | Specific gravity | 0.97 | 0.97 | 0.97 | 0.97 | 0.97 | 0.97 |
| Adhesiveness imparting agent (KBM-603⁽³⁾) | | Parts by mass | 3 | 3 | 3 | 3 | 3 | 3 |
| | | Specific gravity | 1.03 | 1.03 | 1.03 | 1.03 | 1.03 | 1.03 |
| Tin compound | | Type | TC2 | TC2 | TC2 | TC2 | TC2 | TC2 |
| | | Parts by mass | 3.5 | 3.5 | 3.5 | 3.5 | 3.5 | 3.5 |
| | | Specific gravity | 1.22 | 1.22 | 1.22 | 1.22 | 1.22 | 1.22 |
| (R^{B}×Eqb)/(R^{A}×Eqa) | | | 4.0 | 4.0 | 4.0 | 4.0 | 4.0 | 4.0 |
| Filler content(Vol.%) | | | 5.0 | 7.0 | 11 | 5.0 | 5.0 | 5.0 |
| Viscosity Pa·s (23°C) | | 2rpm | 300 | 610 | 1800 | 370 | 250 | 620 |
| | | 20rpm | 65 | 115 | 320 | 75 | 55 | 130 |
| Tensile test | | M100(MPa) | - | 0.032 | 0.076 | - | 0.015 | 0.030 |
| | | TB (MPa) | - | 0.16 | 0.37 | - | 0.12 | 0.16 |
| | | EB (%) | - | 1520 | 1110 | - | 1910 | 1450 |
| Viscoelastic test | | G' -20°C (MPa) | 0.13 | 0.20 | 0.33 | 0.13 | 0.11 | 0.16 |
| | | G' 80°C (MPa) | 0.013 | 0.020 | 0.052 | 0.012 | 0.011 | 0.016 |
| | | tanδ -20°C | 0.58 | 0.54 | 0.43 | 0.55 | 0.56 | 0.54 |
| | | tanδ -80°C | 0.59 | 0.55 | 0.39 | 0.59 | 0.62 | 0.57 |
| Relaxation modulus (G(t), 50°C) | | t_{(80%)}(s) | 1 | 2 | 360 | 1 | 1 | 6 |
| | | t_{(70%)}(s) | 25 | 100 | >1000 | 20 | 10 | 470 |
| Gel fraction | | (%) | - | - | - | - | - | - |

| | | | | | | | | |
|---|---|---|---|---|---|---|---|---|
| (2): vinyltrimethoxysilane (Momentive) (3): N-(2-aminoethyl) -3-aminopropyltrimethoxysilane (Shin-Etsu Chemical Co., Ltd.) (5): fatty acid amide wax (ARKEMA) (6): hindered phenol-based anti-oxidant (BASF) | | | | | | | | |

When the added amount of fillers was increased as shown in Examples 6 to 15, it was found that, although the breaking strength increases, the relaxation worsened. If using carbon black having large oil absorption and BET specific surface area, it is possible to raise the viscosity with a small added amount.

### [Examples 19 to 21]

Compositions were prepared by the same method as Example 6, other than mixing additives with the polymer in the blending ratio shown in Table 5. It should be noted that, in addition to changing the number of silicon-containing groups and silicon-containing group equivalents, polymer (A-6) was prepared similarly to polymer (A-1)

### (Relaxation Modulus)

The cured product was obtained by filling the obtained composition into a mold made of polyethylene of 2 mm thickness so as to have no air bubbles, and curing for 7 days at 23°C and 50% relative humidity. In addition, the cured product was obtained by further curing for 1 day at 80°C. A 1 cm × 1 cm test piece was prepared from each test piece, and using a parallel disk of 8 mm diameter in a jig, measurement of the relaxation modulus was performed giving 30% distortion at 50°C. The time required to relax 20% from the initial relaxation modulus was defined as t(80%). The evaluation results are noted in Table 5.

**[Table 5]**

| | | Example | | |
|---|---|---|---|---|
| | | 19 | 20 | 21 |
| Polymer (A) | Type | A-1 | A-1 | A-1 |
| | Parts by mass | 100 | 80 | 60 |
| | Type of silicon-containing group | DMS | DMS | DMS |
| | Number average molecular weight | 28500 | 28500 | 28500 |
| | Silicon-containing group (per molecule) | 1.6 | 1.6 | 1.6 |
| | Eqa (mmol/g) | 0.056 | 0.056 | 0.056 |
| Polymer (A) | Type | - | - | A-6 |
| | Parts by mass | - | - | 40 |
| | Type of silicon-containing group | - | - | DMS |
| | Number average molecular weight | - | - | 28500 |
| | Silicon-containing group (per molecule) | - | - | 1.2 |
| | Eqa (mmol/g) | - | - | 0.042 |
| Polymer (B) | Type | B-1 | B-1 | B-1 |
| | Parts by mass | 200 | 220 | 200 |
| | Type of silicon-containing group | DMS | DMS | DMS |
| | Number average molecular weight | 7000 | 7000 | 7000 |
| | Silicon-containing group (per molecule) | 0.7 | 0.7 | 0.7 |
| | Eqb (mmol/g) | 0.100 | 0.100 | 0.100 |
| Filler | Type | CB1 | CB1 | CB1 |
| | Parts by mass | 45 | 45 | 45 |
| Thixotropy imparting agent | Parts by mass | 5 | 5 | 5 |
| Antioxidant | Parts by mass | 1 | 1 | 1 |
| Dehydrating agent | Parts by mass | 3 | 3 | 3 |
| Adhesiveness imparting agent | Parts by mass | 3 | 3 | 3 |
| Tin compound | Parts by mass | 3.5 | 3.5 | 3.5 |
| (R^{B}×Eqb)/(R^{A}×Eqa) | | 3.6 | 4.9 | 4.0 |
| Relaxation modulus G(t) | t_{(80%)}(s) 23°C, 1 week | 15 | 2 | 3 |
| | t_{(70%)}(s) 23°C, 1 week + 80°C, 1 week | 300 | 25 | 10 |

As shown in Examples 19 to 21, it is understood that the rate of change in relaxation after heated curing decreased, when the reactive silicon-containing group equivalent ratio ((R^{B}×Eqb)/(R^{A}×Eqa)) of polymer (A) to polymer (B) was 3.7 or more.

### (Examples 22 to 25, and Comparative Example 9)

In Examples 22 to 25, a tire sealant was prepared using the compositions of Examples 7, 10, 20 and 11, and the following evaluations were performed on the obtained tire sealants. In Comparative Example 9, the following tire internal pressure holding test was performed, without using the tire sealant. These evaluation results are noted in Table 6.

It should be noted that the types of filler listed in Table 6 are as follows. Si1: R-972 (surface treaded wet silica, manufactured by Nippon Aerosil Co., Ltd.)
Ca1: Hakuenka CCR (surface treated calcium carbonate, manufactured by Shiraishi Industry Co., Ltd.)
CB1: carbon black (oil absorption 105 mL/100 mg, BET specific surface area 80 m²/g, manufactured by Orion Engineered Carbons)

### (Tensile Test)

The cured product as tire sealant was obtained by filling the composition of the type listed in Table 6 into a mold made of metal of 4 mm thickness so as to have no air bubbles, and curing for 7 days at 23°C and 50% relative humidity. A sample of 5 mm width and 10 mm or more thickness was punched out from the obtained cured product, the tension test was performed (tension rate 500 mm/min, 60°C and -20°C), and the breaking strength (TB) and breaking elongation (EB) were measured. The evaluation results are noted in Table 6.

### (Relaxation Modulus)

The cured product as tire sealant was obtained by filling the composition of the type listed in Table 6 into a mold made of metal of 4 mm thickness so as to have no air bubbles, and curing for 7 days at 23°C and 50% relative humidity. A 1 cm × 1 cm test piece was created, and using a parallel plate-type jig, relaxation curve measurement (initial strain 300%, 60°C) was performed, and the tangent line of time = 0 was defined as the relaxation modulus with the time at which becoming elastic modulus = 0.

### (Tire Internal Pressure Holding Test)

In Examples 22 to 25, a tire in which the tire sealant formed by the same method as the tensile test was arranged on the tire inner surface was used. In Comparative Example 9, a tire in which the tire sealant was not arranged was used in the test. An N150 nail was pushed at the penetration rate of 1000 mm/min from the tire outer surface so that the leading end of the 40 mm nail appeared at the tire inner surface, and the air leakage of the tire after extracting this nail was evaluated. A case of the air holding rate after 24 hours since extracting being 100% was defined as good, and a case of 99% or less was defined as poor.

**[Table 6]**

| | | Example | | | | Comparative example 9 |
|---|---|---|---|---|---|---|
| | | 22 | 23 | 24 | 25 | |
| Type of composition used in tire sealant formation | | Example 7 | Example 10 | Example 20 | Example 21 | - |
| Type of filler in composition | | Si1 | Ca1 | CB1 | CB1 | - |
| Tensile test (60°C) | TB(kPa) | 45 | 40 | 42 | 63 | - |
| | EB(%) | 1440 | 1180 | 1620 | 1580 | - |
| Tensile test (-20°C) | TB(kPa) | 360 | 395 | 150 | 210 | - |
| | EB (%) | 1620 | 1620 | 1880 | 2250 | - |
| Relaxation modulus (-20°C) | ΔG(t) | 0.92 | 0.98 | 0.87 | 0.89 | - |
| Tire internal pressure holding test | N150 nail | Good | Good | Good | Good | Poor |

Table 6 shows the results of forming tire sealant using the samples of representative compositions for each of the types of fillers, from among the Examples listed in Tables 3 to 5, and performing tensile test and relaxation modulus measurement on the obtained tire sealant, and internal pressure holding test on the tire including the tire sealant.

Evaluations were performed on a tire sealant formed using the composition of Example 7, as the tire sealant formed using a composition containing silica. For the composition of Example 7, due to satisfying the most preferable range of filler content as a composition containing silica, and as a result thereof, having suitable relaxation modulus as a tire sealant, the tire sealant formed using the composition of Example 7 was defined as the representative sample of a tire sealant containing silica.

As the tire sealant formed using a composition containing calcium carbonate, evaluations were performed on the tire sealant formed using the composition of Example 10. Regarding the composition of Example 10, due to the balance of relaxation modulus and G' being the most favorable in a tire application, as a composition containing calcium carbonate, the tire sealant formed using the composition of Example 10 was defined as a representative sample of a tire sealant containing calcium carbonate.

As a tire sealant formed using a composition containing carbon black, evaluations were performed on a tire sealant formed using the compositions of Example 20 and Example 21. Although the compositions containing CB1, CB2, CB3 and CB4 as the carbon black are as mentioned above, CB1 is particularly favorable in the aspect of workability. Thereamong, tire sealants formed using the compositions of Example 20 and Example 21 having favorable relaxation modulus t(80%) and t(70%) were defined as the representative samples of a tire sealant containing carbon black.

It is understood from Table 6 that the tire sealant formed using a composition containing any filler of calcium carbonate, silica and carbon black gives a tire exhibiting favorable tensile characteristic in the wide temperature range required in a tire, and relaxation modulus at low temperature, and having good results for tire internal pressure holding. The values of EB at both high temperature and low temperature were particularly favorable in the tire sealant containing silica or carbon black, and were more favorable in the tire sealant composition containing carbon black.

## Claims

1. A polymer blend comprising an organic polymer having a reactive silicon-containing group represented by general formula (1), wherein the organic polymer contains a polyoxyalkylene (A) having a number average molecular weight of 13,000 or higher and 100,000 or lower, reactive silicon-containing group equivalent Eqa of 0.010 mmol/g or more and0.29 mmol/g or less, and more than 1 silicon-containing groups per molecule; and a polyoxyalkylene (B) having a number average molecular weight of 3,000 or more and 25,000 or less, and reactive silicon-containing group equivalent Eqb of 0.03 mmol/g or more and 0.58 mmol/g or less, and
wherein a value of (R^{B}×Eqb)/(R^{A}×Eqa) is 1.9 or more and 7.0 or less, when defining content of the polyoxyalkylene (A) in the polymer blend as R^{A} mass% and defining content of the polyoxyalkylene (B) in the polymer blend as R^{B} mass%,
-SiR¹₁X₂ (1)
wherein R¹ is a substituted or unsubstituted hydrocarbon group having 1 or more and 20 or less carbon atoms,
X is a hydroxyl group or hydrolysable group, and
two of X may be the same, or may differ.

2. The polymer blend according to claim 1, wherein the value of (R^{B}×Eqb)/(R^{A}×Eqa) is 3.7 or more and 7.0 or less.

3. The polymer blend according to claim 1 or 2, wherein storage modulus G' measured at a frequency of 1 Hz at -20°C to 80°C of a cured product of the polymer blend is 2 kPa or more and 0.5 MPa or less, and loss tangent is 0.3 or more and 2.0 or less.

4. The polymer blend according to any one of claims 1 to 3, wherein breaking elongation (EB) at 23°C of a cured product of the polymer blend is 800% or more.

5. The polymer blend according to any one of claims 1 to 4, wherein gel fraction of a cured product of the polymer blend is 0.5% or more and 40% or less.

6. A composition comprising the polymer blend according to any one of claims 1 to 5; at least one filler selected from the group consisting of fillers of calcium carbonate, silica and carbon black; and a curing catalyst.

7. The composition according to claim 6, wherein the filler is calcium carbonate, and content of the calcium carbonate is 0.1 vol.% or more and 15 vol.% or less relative to total volume of the composition.

8. The composition according to claim 6, wherein the filler is silica, and content of the silica is 0.1 vol.% or more and 5 vol.% or less relative to total volume of the composition.

9. The composition according to claim 6, wherein the filler is carbon black, and content of the carbon black is 0.1 vol.% or more and 10 vol.% or less relative to total volume of the composition.

10. The composition according to claim 9, wherein oil absorption of the carbon black is 100 mL/100 g or more.

11. The composition according to claim 9 or 10, wherein BET specific surface area of the carbon black is 80 m²/g or more.

12. A sealant comprising the composition according to any one of claims 6 to 11, or a cured product of the composition.

13. A tire sealant comprising the composition according to any one of claims 6 to 11, or a cured product of the composition.

14. The tire sealant according to claim 13, wherein breaking elongation (EB) at -20°C to 60°C is 1000% or more.

15. The tire sealant according to claim 13 or 14, wherein maximum stress in a tension test at 60°C is 40 kPa or more, and maximum stress at -20°C is 400 kPa or less.

16. The tire sealant according to any one of claims 13 to 15, wherein relaxation rate ΔG(t) measured by relaxation modulus measurement test performed at a measurement temperature of - 20°C and initial strain of 300% is 1.0 or more.

17. A tire comprising the tire sealant according to any one of claims 13 to 16.
